# EUROPEAN PATENT APPLICATION

(11) **EP 4 624 823 A1**
(43) Date of publication of application: **01.10.2025**
(21) Application number: 24891841.9
(22) Date of filing: 11.10.2024
(51) Int. Cl.: F24F 12/00, F24F 11/65, F24F 11/00, F24F 13/10, F25B 13/00, F25B 49/02, F25B 5/04, F24F 7/08

(54) **VENTILATION SYSTEM AND METHOD FOR CONTROLLING THE SAME**

(30) Priority: 16.11.2023 KR 20230159597
(71) Applicant: Samsung Electronics Co., Ltd., Suwon-si, Gyeonggi-do 16677 (KR)
(72) Inventor: KIM, Sunggoo, Suwon-si Gyeonggi-do 16677 (KR); KIM, Kyunghoon, Suwon-si Gyeonggi-do 16677 (KR); NA, Seonuk, Suwon-si Gyeonggi-do 16677 (KR); YUN, Younguk, Suwon-si Gyeonggi-do 16677 (KR); LEE, Donggyu, Suwon-si Gyeonggi-do 16677 (KR); JANG, Eomji, Suwon-si Gyeonggi-do 16677 (KR)
(74) Representative: Gulde & Partner
(86) International application number: PCT/KR2024/096349
(87) International publication number: WO 2025/105895

(57) **Abstract**

A ventilation system includes: a housing including a first inlet configured to draw outdoor into the housing, a second inlet configured to draw room air into the housing, a first outlet configured to discharge the outdoor air into an indoor space, and a second outlet configured to discharg the room air to an outdoor space; a total heat exchanger configured to perform heat exchange between the outdoor air and the room air; a first heat exchanger disposed between the first inlet and the total heat exchanger; a second heat exchanger disposed between the first inlet and the first heat exchanger; a compressor configured to supply a refrigerant to the first heat exchanger and the second heat exchanger; a four-way valve configured to switch a flow direction of the refrigerant; a first expansion device comprising a valve disposed at an inlet of the first heat exchanger and configured to expand the refrigerant; a second expansion device comprising a valve disposed between the first heat exchanger and the second heat exchanger and configured to expand the refrigerant; and at least one processor comprising processing circuitry.

## Description

### [Technical Field]

The disclosure relates to a ventilation system and a method for controlling the same to provide pleasant air into an indoor space.

### [Background Art]

A ventilation apparatus is an apparatus capable of supplying outdoor air to an indoor space or exchanging indoor air with outdoor air to ventilate the indoor space. Existing ventilation apparatus has no choice but to regulate an indoor temperature and humidity through total heat exchange between outdoor air and indoor air that occurs while passing through a total heat exchanger. This leads to incomplete dehumidification of the outdoor air supplied to the indoor space and makes it difficult to maintain the indoor temperature and humidity in a pleasant state.

In a case where only heat exchange between outdoor air and indoor air is performed by a heat exchanger, the moisture contained in the outdoor air may not be sufficiently removed. In addition, the heat exchanger may freeze in winter when the outdoor temperature is low.

### [Disclosure]

Embodiments of the disclosure provide a ventilation system that may remove moisture contained in the air drawn in from the outside before the outdoor air passes through a heat exchanger, and cool or heat the air, and a method for controlling the same.

Embodiments of the disclosure provide a ventilation system that may prevent and/or reduce freezing of a heat exchanger, and a method for controlling the same.

Embodiments of the disclosure provide a ventilation system that may allow or block an inflow of outdoor air depending on a setting, and a method for controlling the same.

According to an example embodiment, a ventilation system may include a ventilation apparatus and an outdoor unit. The ventilation system may include: a housing including a first inlet configured to draw outdoor air into the housing, a second inlet configured to draw room air into the housing, a first outlet through configured to discharge outdoor air into an indoor space, and a second outlet configured to discharge room air to an outdoor space; a total heat exchanger configured to perform heat exchange between the outdoor air and the room air; a first heat exchanger disposed between the first inlet and the total heat exchanger; a second heat exchanger disposed between the first inlet and the first heat exchanger; a compressor configured to supply a refrigerant to the first heat exchanger and the second heat exchanger; a four-way valve configured to switch a flow direction of the refrigerant; a first expansion device comprising a valve disposed at an inlet of the first heat exchanger and configured to expand the refrigerant; a second expansion device comprising a valve disposed between the first heat exchanger and the second heat exchanger and configured to expand the refrigerant; and at least one processor, comprising processing circuitry.

According to an example embodiment, a method for controlling a ventilation system may include: detecting, by a humidity sensor, a first humidity of outdoor air and a second humidity of room air; detecting, by a temperature sensor, a first temperature of the outdoor air and a second temperature of the room air; determining, by at least one processor, individually and/or collectively, an operation mode of the ventilation system, based on the first humidity of the outdoor air, the second humidity of the room air, the first temperature of the outdoor air, and the second temperature of the room air; and controlling, by at least one processor, individually and/or collectively, a compressor configured to supply a refrigerant to a heat exchanger, a four-way valve configured to switch a flow direction of the refrigerant, a first expansion device comprising a valve disposed at an inlet of a first heat exchanger to expand the refrigerant, and a second expansion device comprising a valve disposed between the first heat exchanger and a second heat exchanger, based on the operation mode of the ventilation system.

According to various example embodiments, a ventilation system and a method for controlling the same may remove moisture contained in the air drawn in from the outside before the outdoor air passes through a heat exchanger, and cool or heat the air, and thus air with appropriate humidity and temperature may be supplied to an indoor space.

According to various example embodiments, a ventilation system and a method for controlling the same may prevent and/or reduce freezing of a heat exchanger, and thus usability of the heat exchanger may be increased even in a low outdoor temperature environment.

According to various example embodiments, a ventilation system and a method for controlling the same may allow or block an inflow of outdoor air depending on a setting.

### [Description of Drawings]

FIG. 1 is a diagram illustrating an example ventilation system including a ventilation apparatus according to various embodiments;
FIG. 2 is a diagram illustrating a plan view of an inside of a ventilation apparatus viewed from above, according to various embodiments;
FIG. 3 is a diagram illustrating an example in which placement of heat exchangers is modified in the ventilation apparatus of FIG. 2 according to various embodiments;
FIG. 4 is a diagram illustrating example circulation of refrigerant in a ventilation system according to various embodiments;
FIG. 5 is an exploded perspective view of a ventilation apparatus according to various embodiments;
FIG. 6 is a perspective view of a ventilation apparatus with various components removed therefrom, viewed from below, according to various embodiments;
FIG. 7 is a perspective view illustrating a first inner housing of the ventilation apparatus shown in FIG. 5, which is upside down, according to various embodiments;
FIG. 8 is a perspective view illustrating a second inner housing of the ventilation apparatus shown in FIG. 5, which is upside down, according to various embodiments;
FIG. 9 is a diagram illustrating an integrated air conditioning system including a ventilation apparatus according to various embodiments;
FIG. 10 is a block diagram illustrating an example configuration of a ventilation apparatus according to various embodiments;
FIG. 11 is a block diagram illustrating an example configuration of an integrated controller according to various embodiments;
FIG. 12 is a diagram illustrating example flow of air passing through a heat exchanger in a ventilation apparatus during outdoor air circulation according to various embodiments;
FIG. 13 is a diagram illustrating a modified placement of heat exchangers in the ventilation apparatus of FIG. 12 according to various embodiments;
FIG. 14 is a diagram illustrating example flow of air passing through a bypass flow path in the ventilation apparatus of FIG. 12 according to various embodiments;
FIG. 15 is a diagram illustrating example flow of air passing through a bypass flow path in the ventilation apparatus of FIG. 13 according to various embodiments;
FIG. 16 is a diagram illustrating example flow of air in a ventilation apparatus during indoor air circulation according to various embodiments;
FIG. 17 is a diagram illustrating modified placement of heat exchangers in the ventilation apparatus of FIG. 16 according to various embodiments;
FIG. 18 is a flowchart illustrating a method for controlling a ventilation system according to various embodiments;
FIG. 19 is a flowchart illustrating an example method for controlling a ventilation system of FIG. 18 according to various embodiments
FIG. 20 is a flowchart illustrating an example method for controlling a ventilation system of FIG. 19 according to various embodiments; and
FIG. 21 is a flowchart illustrating an example method for controlling a ventilation system during indoor air circulation according to various embodiments.

### [Modes of the Disclosure]

Embodiments described in the disclosure and configurations shown in the accompanying drawings are merely examples of the disclosure, and various modifications may may be made at the time of filing of the application.

Throughout the drawings, like reference numerals refer to like parts or components. For clarity, the elements of the drawings may be drawn with exaggerated forms and sizes.

It will be further understood that the term "connect" or its derivatives refer both to direct and indirect connection, and the indirect connection includes a connection over a wireless communication network.

The terms used herein are used simply to describe various example embodiments and are not intended to limit the disclosure. It is to be understood that the singular forms are intended to include the plural forms as well, unless the context clearly dictates otherwise. It will be understood that the terms "include" and "have," are intended to indicate the presence of the features, numbers, steps, operations, components, parts, or combinations thereof disclosed in the disclosure, but do not preclude the presence or addition of one or more other elements.

It will be understood that, although the terms including ordinal numbers, such as "first", "second", etc., may be used herein to describe various components, these components should not be limited by these terms. These terms are simply used to distinguish one component from another. For example, a first component could be termed a second component, and, similarly, a second component could be termed a first component, without departing from the scope of the disclosure. As used herein, the term "and/or" includes any and all combinations of one or more of associated listed items.

Further, the terms, such as "~ part", "~ portion", "~ block", "~ member", "~ module", etc., may refer to a unit of handling at least one function or operation. For example, the terms may refer to at least one process handled by hardware such as field-programmable gate array (FPGA)/application specific integrated circuit (ASIC), etc., software stored in a memory, or at least one processor.

Reference numerals used for method steps are just used to identify the respective steps, but not to limit an order of the steps. Thus, unless the context clearly dictates otherwise, the written order may also be practiced otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases.

Hereinafter, a ventilation system and a method for controlling the same according to various embodiments are described in greater detail with reference to the drawings.

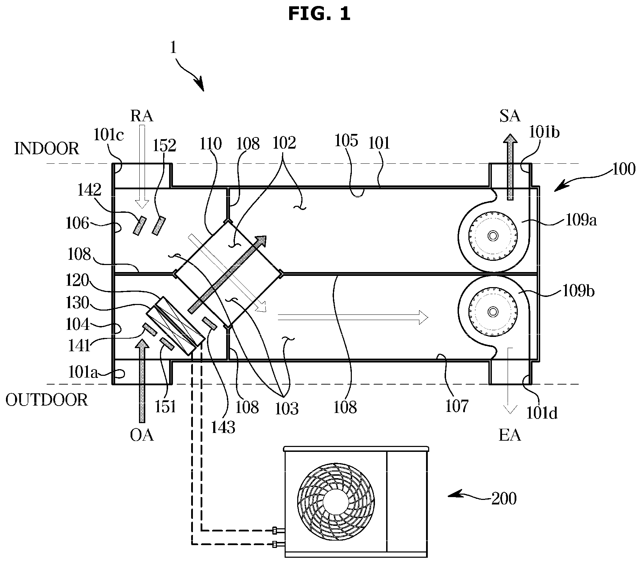

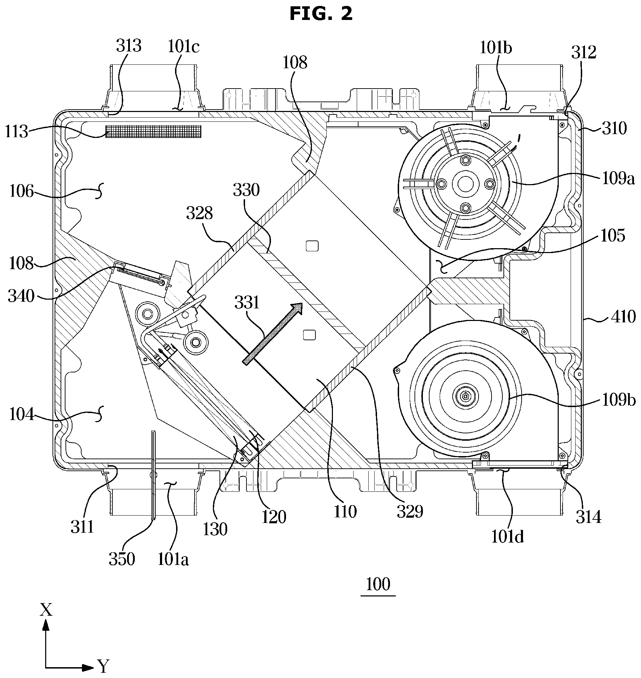

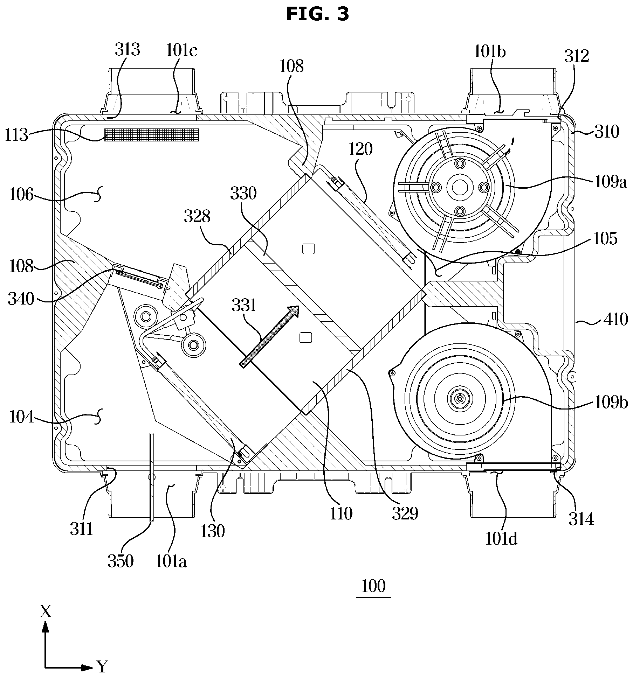

FIG. 1 is a diagram illustrating an example ventilation system including a ventilation apparatus according to various embodiments. FIG. 2 is a diagram illustrating a plan view of an inside of a ventilation apparatus viewed from above, according to various embodiments. FIG. 3 is a diagram illustrating an example in which placement of heat exchangers is modified in the ventilation apparatus of FIG. 2 according to various embodiments.

Referring to FIG. 1, FIG. 2, and FIG. 3, a ventilation system 1 may include a ventilation apparatus 100 connected to an indoor space and an outdoor space (outside). The ventilation system 1 may also include an outdoor unit 200 for supplying a refrigerant to the ventilation apparatus 100. The ventilation apparatus 100 and the outdoor unit 200 may be installed in a machine room (e.g., a utility room in a house) distinguished from the outdoor space and the indoor space. The location where the ventilation apparatus 100 and the outdoor unit 200 are installed is not limited thereto.

Because the outdoor unit 200 corresponds to an outdoor unit for an air conditioner generally known in the art, those skilled in the art may easily modify or add configurations required for implementing the outdoor unit 200. Because the ventilation system 1 according to the disclosure may be operated using a generally used outdoor unit 200, the ventilation apparatus 100 does not include a separate compressor or the like, thereby miniaturizing and reducing manufacturing costs.

The ventilation apparatus 100 may include a housing 101 that defines an external appearance. For example, the housing 101 may be shaped like a hexahedron. The housing 101 may include an intake flow path 102 that draws in and guides outdoor air OA into the indoor space, and a discharge flow path 103 that guides room air RA to the outdoor space. The intake flow path 102 and the discharge flow path 103 may be separated by a plurality of partitions 108.

The housing 101 may include a first inlet 101a connected to the outdoor space and formed to draw in the outdoor air OA into the housing 101, a first outlet 101b connected to the indoor space and formed to discharge the outdoor air OA drawn into the housing 101 to the indoor space, and a first intake room 104 and a second intake room 106, both of which form the intake flow path 102. The intake flow path 102 may connect the first inlet 101a to the first outlet 101b.

The housing 101 may include a second inlet 101c connected to the indoor space and formed to draw in the room air RA into the housing 101, a second outlet 101d connected to the outdoor space and formed to discharge the room air RA drawn into the housing 101 to the outdoor space, and a first discharge room 105 and a second discharge room 107, both of which form the discharge flow path 103. The discharge flow path 103 may connect the second inlet 101c to the second outlet 101d.

The ventilation apparatus 100 may include a first blower 109a disposed adjacent to the first outlet 101b in the second intake room 106, and a second blower 109b disposed adjacent the second outlet 101d in the second discharge room 107. The first blower 109a may generate wind power required to discharge air to the first outlet 101b. The second blower 109b may generate wind power required to discharge air to the second outlet 101d. Specifically, operation of the first blower 109a may cause the outdoor air to be drawn into the housing 101 through the first inlet 101a and the air in the housing 101 to be discharged to the indoor space through the first outlet 101b. Operation of the second blower 109b may cause the room air to be drawn into the housing 101 through the second inlet 101c and the air in the housing 101 to be discharged to the outdoor space through the second outlet 101d.

The ventilation apparatus 100 may include a total heat exchanger 110 configured to exchange heat between the outdoor air OA and the room air RA. The air flowing through the discharge flow path 103 and the air flowing through the intake flow path 102 may exchange heat with each other in the total heat exchanger 110. During a ventilating operation of the ventilation system 1, the air discharged to the indoor space through the first outlet 101b may be referred to as 'supplied air SA', and the air discharged to the outdoor space through the second outlet 101d may be referred to as 'exhaust air EA'.

The total heat exchanger 110 may be formed of a paper material coated with lithium chloride and may also be referred to as a total heat exchanging element. The total heat exchanger 110 may be implemented as a plate-type total heat exchanger or a rotary-type total heat exchanger. The total heat exchanger 110 may be disposed at a point where the intake flow path 102 and the discharge flow path 103 cross. In other words, the total heat exchanger 110 is positioned in the intake flow path 102 and at the same time, in the discharge flow path 103.

The total heat exchanger 110 may connect the first intake room 104 and the second intake room 106. The total heat exchanger 110 may connect the first discharge room 105 and the second discharge room 107. During the ventilating operation of the ventilation system 1, the outdoor air OA flowing through the intake flow path 102 and the room air RA flowing through the discharge flow path 103 exchange heat in the total heat exchanger 110 without contact.

The ventilation apparatus 100 may include a filter for capturing foreign materials contained in the outdoor air OA. The filter may be positioned adjacent to the total heat exchanger 110. The filter may be positioned between the first inlet 101a and the total heat exchanger 110. The filter may filter the foreign materials contained in the outdoor air OA flowing in through the first inlet 101a and prevent and/or reduce contamination of the total heat exchanger 110.

For example, the filter may be a High Efficiency Particulate Air (HEPA) filter. The HEPA filter may be glass fiber. The filter may be provided as a photocatalytic filter that uses a photocatalyst to induce a chemical action of air. Specifically, the filter may include a photocatalyst and induce a chemical reaction to light energy of the photocatalyst to capture various pathogens and bacteria present in the air. Acceleration of the chemical action may lead to decomposition, removal or capture of odor particles in the air. However, the filter is not limited thereto, and many different types of filters capable of capturing foreign materials may be provided as the filter.

Existing ventilation apparatuses include only a total heat exchanger for performing heat exchange between the outdoor air OA and the room air RA. The existing ventilation apparatuses are not connected to the outdoor unit. In other words, the existing ventilation apparatuses do not include a separate heat exchanger that receives the refrigerant from the outdoor unit. The existing ventilation apparatuses are only capable of supplying outdoor air into the indoor space and discharge room air to the outdoor space, and are not capable of cooling or heating the outdoor air and performing a dehumidifying function to remove moisture contained in the outdoor air.

However, the ventilation apparatus 100 according to the disclosure may include heat exchangers 120 and 130 to regulate humidity and temperature of the air flowing through the intake flow path 102. The intake flow path 102 may be referred to as a 'first flow path'. The heat exchangers 120 and 130 may be referred to as a 'dehumidification module'. The heat exchangers 120 and 130 may remove moisture contained in the air passing through the heat exchangers 120 and 130. As the moisture contained in the air may be removed while passing through the heat exchangers 120 and 130, dry air may be supplied into the indoor space. In addition, air may be cooled or heated as the air passes through the heat exchangers 120 and 130.

Referring to FIG. 2, the heat exchangers 120 and 130 may include the first heat exchanger 120 and the second heat exchanger 130. The heat exchangers 120 and 130 may be positioned in the intake flow path 102. The heat exchangers 120 and 130 may be positioned between the first inlet 101a and the total heat exchanger 110. The heat exchangers 120 and 130 may be positioned in the first intake room 104. That is, the first heat exchanger 120 and the second heat exchanger 130 may be positioned upstream of the intake flow path 102 than the total heat exchanger 110.

The second heat exchanger 130 may be positioned upstream of the intake flow path 102 than the first heat exchanger 120. In other words, the first heat exchanger 120 may be positioned downstream of the intake flow path 102 than the second heat exchanger 130.

Referring to FIG. 3, the first heat exchanger 120 may be disposed between the total heat exchanger 110 and the first blower 109a. The first heat exchanger 120 may be positioned in the second intake room 106. Air that has passed through the total heat exchanger 110 may pass through the first heat exchanger 120. The second heat exchanger 130 may be disposed between the first inlet 101a and the total heat exchanger 110. The second heat exchanger 130 may be positioned in the first intake room 104. Air flowing in through the first inlet 101a may pass through the second heat exchanger 130 and then flow into the total heat exchanger 110.

The number of heat exchangers arranged in the ventilation apparatus 100 is not limited thereto. That is, the ventilation apparatus 100 may include two or more heat exchangers.

The outdoor air OA drawn in through the first inlet 101a may pass through the first intake room 104, the second heat exchanger 130, the first heat exchanger 120, and the total heat exchanger 110 in sequence and then be discharged to the indoor space through the first outlet 101b. The room air RA drawn in through the second inlet 101c may pass through the first discharge room 105 and the total heat exchanger 110 and then be discharged to the outdoor space through the second outlet 101d.

The air flowing through the intake flow path 102 connected between the first inlet 101a and the first outlet 101b may be cooled and/or heated by the first heat exchanger 120 and the second heat exchanger 130. In addition, moisture contained in the air may be removed by the first heat exchanger 120 and the second heat exchanger 130.

The ventilation apparatus 100 may include a sterilization device 113 for sterilizing the room air RA drawn in through the second inlet 101c. The sterilization device 113 may be positioned in the first discharge room 105. For example, the sterilization device 113 may include at least one of a heater, an infrared lamp, or a Ultraviolet Light Emitting Diode (UV-LED).

The ventilation apparatus 100 may include various temperature sensors. For example, the ventilation apparatus 100 may include an outdoor temperature sensor 141 detecting a first temperature (outdoor temperature) of outdoor air and an indoor temperature sensor 142 detecting a second temperature (indoor temperature) of room air. The outdoor temperature sensor 141 may be referred to as a first temperature sensor. The indoor temperature sensor 142 may be referred to as a second temperature sensor.

The ventilation apparatus 100 may include various humidity sensors. For example, the ventilation apparatus 100 may include an outdoor humidity sensor 151 detecting a first humidity (outdoor humidity) of outdoor air and an indoor humidity sensor 152 detecting a second humidity (indoor humidity) of room air. The outdoor humidity and the indoor humidity may represent relative humidity or absolute humidity. The outdoor humidity sensor 151 may be referred to as a first humidity sensor. The indoor humidity sensor 152 may be referred to as a second humidity sensor.

The outdoor temperature sensor 141 and the outdoor humidity sensor 151 may be arranged on the intake flow path 102. For example, the outdoor temperature sensor 141 and the outdoor humidity sensor 151 may be positioned in the first intake room 104 between the first inlet 101a and the heat exchangers 120 and 130, without being limited thereto. The outdoor temperature sensor 141 and the outdoor humidity sensor 151 may be disposed outside of the housing 101.

The indoor temperature sensor 142 and the indoor humidity sensor 152 may be arranged on the discharge flow path 103. The indoor temperature sensor 142 and the indoor humidity sensor 152 may be positioned in the first intake room 104. The indoor temperature sensor 142 and the indoor humidity sensor 152 may be positioned upstream of the discharge flow path 103 than the total heat exchanger 110.

The indoor temperature sensor 142 may measure a temperature of the room air drawn in through the second inlet 101c. The indoor humidity sensor 152 may measure a humidity of the room air drawn in through the second inlet 101c. However, the disclosure is not limited thereto, and the indoor temperature sensor 142 and the indoor humidity sensor 152 may be disposed outside of the housing 101.

In addition, the ventilation apparatus 100 may further include a heat exchange temperature sensor 143 disposed between the first heat exchanger 120 and the total heat exchanger 110 to detect a temperature of air that has passed through the first heat exchanger 120 and the second heat exchanger 130. The heat exchange temperature sensor 143 may be positioned upstream of the intake flow path 102 than the total heat exchanger 110.

The ventilation apparatus 100 may include the sterilization device 113 for sterilizing the room air drawn in through the second inlet 101c. The sterilization device 113 may be positioned in the second intake room 106. For example, the sterilization device 113 may include at least one of a heater, an infrared lamp, or a UV-LED.

Referring to FIG. 2 and FIG. 3, the ventilation apparatus 100 may include various dampers for opening or closing a flow path formed in the ventilation apparatus 100. For example, the ventilation apparatus 100 may include a first damper 330 positioned on a bypass flow path 331 that bypasses the total heat exchanger 110, a second damper 340 positioned on a connection flow path connecting the first intake room 104 and the first discharge room 105, and a third damper 350 positioned at the first inlet 101a. An opening degree of each of the first damper 330, the second damper 340, and the third damper 350 may be controlled by a processor 192 of the ventilation apparatus 1.

The first damper 330 may be positioned at an upper portion of the total heat exchanger 110. The first damper 330 may open or close the bypass flow path 331 that bypasses the total heat exchanger 110 between the first inlet 101a and the first outlet 101b. The processor 192 of the ventilation apparatus 100 may adjust the opening degree of the first damper 330. The first damper 330 may be positioned at a lower portion of the total heat exchanger 110.

A first molding 328 and a second molding 329 may be arranged between one side of the total heat exchanger 110 and a second inner housing 320. By the first molding 328 and the second molding 329, the room air flowing in from the second inlet 101c is not allowed to flow to the second outlet 101d through an upper space of the total heat exchanger 110. The outdoor air flowing in from the first inlet 101a is allowed to flow to the first outlet 101b through the bypass flow path 331 formed in the upper space of the total heat exchanger 110.

The first damper 330 may be disposed between the first molding 328 and the second molding 329, and may be supported by the first molding 328 and the second molding 329. The first damper 330 may be disposed vertically to the first molding 328 and the second molding 329, and may be rotatable. The first damper 330 may be provided in a rectangular shape. The first damper 330 may be rotated in a direction toward the first intake room 104 or toward the second intake room 106.

The second damper 340 may be disposed between one side of the total heat exchanger 110 and an inner wall of the housing 101. The second damper 340 may open or close the connection flow path connecting the first intake room 104 and the first discharge room 105. By opening the second damper 340, the room air introduced into the first discharge room 105 through the second inlet 101c may move to the first intake room 104.

The third damper 350 may be disposed at the first inlet 101a and may open or close the first inlet 101a. Opening the third damper 350 may allow outdoor air to flow into the housing 101. Closing the third damper 350 may block outdoor air from flowing into the housing 101.

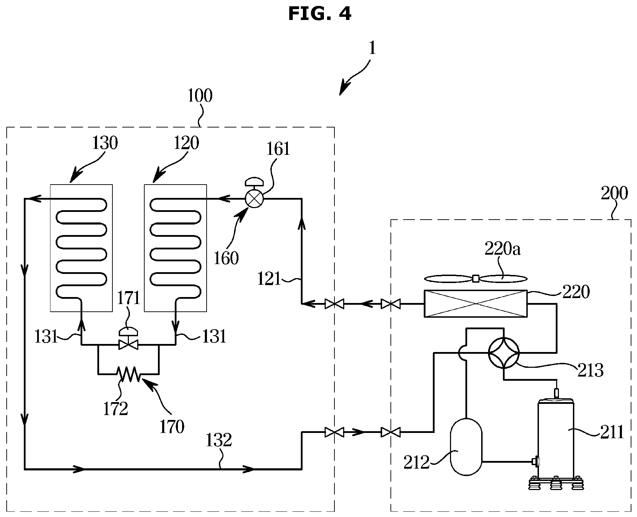

FIG. 4 is a diagram illustrating example circulation of refrigerant in a ventilation system according to various embodiments.

Referring to FIG. 4, the outdoor unit 200 may include a compressor 211, an accumulator 212, a four-way valve 213, and an outdoor heat exchanger 220. The compressor 211 and the outdoor heat exchanger 220 may be connected by the four-way valve 213. The four-way valve 213 may switch a flow direction of refrigerant.

The outdoor unit 200 may include a cooling fan 220a to regulate a temperature of the outdoor heat exchanger 220. The cooling fan 220a may discharge air toward the outdoor heat exchanger 220 and cool the outdoor heat exchanger 220. In a case where the outdoor heat exchanger 220 is cooled by the cooling fan 220a, a temperature of the refrigerant passing through the outdoor heat exchanger 220 may be reduced compared to a case where the cooling fan 220a is not provided.

The first heat exchanger 120 may be connected to the outdoor unit 200 by a first refrigerant pipe 121. The first heat exchanger 120 may be connected to the outdoor heat exchanger 220 of the outdoor unit 200 by the first refrigerant pipe 121. The second heat exchanger 130 may be connected to the first heat exchanger 120 by a second refrigerant pipe 131. The second heat exchanger 130 may be connected to the outdoor unit 200 by a third refrigerant pipe 132. The second heat exchanger 130 may be connected to the accumulator 212 of the outdoor unit 200 by the third refrigerant pipe 132.

The ventilation apparatus 100 may include a first expansion device 160 disposed on the first refrigerant pipe 121. The first expansion device 160 may selectively expand the refrigerant supplied to the first heat exchanger 120 through the first refrigerant pipe 121. The refrigerant that has passed the first expansion device 160 may be in a more decompressed state than before passing through the first expansion device 160.

The ventilation apparatus 100 may include a second expansion device 170 disposed on the second refrigerant pipe 131. The second expansion device 170 may selectively expand the refrigerant discharged from the first heat exchanger 120 and supplied to the second heat exchanger 130 through the second refrigerant pipe 131. The refrigerant that has passed through the second expansion device 170 may be in a more decompressed state than before passing through the second expansion device 170. The first expansion device 160 and the second expansion device 170 may be disposed in the housing 101. The second refrigerant pipe 131 may be disposed in the housing 101.

The first expansion device 160 may expand a high temperature, high pressure refrigerant to a low temperature, low pressure refrigerant according to a throttling action, and may regulate a flow rate of the refrigerant supplied to the first heat exchanger 120. The first expansion device 160 may decompress the refrigerant using the throttling action by which the refrigerant is decompressed by passing through a narrow flow path without exchanging heat with the outside. For example, the first expansion device 160 may include an Electronic Expansion Valve (EEV) 161. The EEV 161 may regulate an expansion degree and flow rate of the refrigerant by controlling the opening degree. In a case where the EEV 161 is fully opened, the refrigerant may pass through the EEV 161 without resistance and may not expand.

The second expansion device 170 may expand a high temperature, high pressure refrigerant to a low temperature, low pressure refrigerant according to the throttling action. For example, the second expansion device 170 may include a solenoid valve 171 and a capillary tube 172 connected in parallel with the solenoid valve 171. Upon locking of the solenoid valve 171, the refrigerant may move to the capillary tube 172 to be expanded by throttling, and upon unlocking of the solenoid valve 171, the refrigerant may flow through the solenoid valve 171 without resistance and may not be expanded. To efficiently control the flow and expansion of the refrigerant, the solenoid valve 171 may be replaced by the EEV.

However, the disclosure is not limited thereto. For example, the first expansion device 160 and the second expansion device 170 may all include the EEVs. The first expansion device 160 may include a solenoid valve and a capillary tube connected in parallel with the solenoid valve, and the second expansion device 170 may include an EEV. The first expansion device 160 and the second expansion device 170 may each include a solenoid valve and a capillary tube connected in parallel with the solenoid valve. The solenoid valve connected in parallel with the capillary tube may be replaced by an EEV.

**In** a case where an inflow of outdoor air is allowed, an operation mode of the ventilation system 1 may be determined as a cooling dehumidification mode (first mode) for drying and cooling the outdoor air, a constant temperature dehumidification mode (second mode) for drying and heating the outdoor air, a moisture recovery mode (third mode) for recovering moisture contained in room air, or a ventilation mode (fourth mode) for stopping an operation of the compressor. The ventilation apparatus 100 may operate in one of the cooling dehumidification mode (first mode), the constant temperature dehumidification mode (second mode), the moisture recovery mode (third mode), or the ventilation mode (fourth mode), based on an outdoor temperature, an indoor temperature, an outdoor humidity, and an indoor humidity.

In a case where an inflow of outdoor air is allowed, the processor 192 of the ventilation apparatus 100 may control components of the ventilation apparatus 100 to allow the ventilation system 1 to be operated in the cooling dehumidification mode (first mode), the constant temperature dehumidification mode (second mode), the moisture recovery mode (third mode), or the ventilation mode (fourth mode). The ventilation apparatus 100 may operate by switching between the cooling dehumidification mode (first mode), the constant temperature dehumidification mode (second mode), the moisture recovery mode (third mode), and the ventilation mode (fourth mode) according to changes in the outdoor temperature, indoor temperature, outdoor humidity, and indoor humidity. The cooling dehumidification mode (first mode) is now described. In the cooling dehumidification mode (first mode), the refrigerant compressed by the compressor 211 may be first supplied to the outdoor heat exchanger 220 through the four-way valve 213, and then supplied to the first heat exchanger 120 through the first expansion device 160.

In the cooling dehumidification mode (first mode), the first expansion device 160 may expand the refrigerant. The second expansion device 170 may or may not expand the refrigerant. Preferably, the second expansion device 170 may not expand the refrigerant in the cooling dehumidification mode (first mode) to allow the refrigerant to flow smoothly. To this end, the solenoid valve 171 of the second expansion device 170 may be opened in the cooling dehumidification mode (first mode).

The high temperature, high pressure refrigerant discharged from the compressor 211 may pass through the four-way valve 213, be condensed in the outdoor heat exchanger 220 of the outdoor unit 200, and then flow into the first expansion device 160. The first expansion device 160 may expand the high temperature, high pressure refrigerant to a low temperature, low pressure state to allow the refrigerant to be evaporated by the first heat exchanger 120 and the second heat exchanger 130.

The refrigerant expanded by the first expansion device 160 may flow into the first heat exchanger 120, and evaporate by absorbing heat from air passing through the first heat exchanger 120. The refrigerant discharged from the first heat exchanger 120 and flowing into the second heat exchanger 130 may again absorb heat from surrounding air in the second heat exchanger 130. The first heat exchanger 120 and the second heat exchanger 130 may condense and remove moisture contained in the air passing through the first heat exchanger 120 and the second heat exchanger 130, and may cool the air passing through the first heat exchanger 120 and the second heat exchanger 130. For example, the ventilation apparatus 100 operating in the cooling dehumidification mode (first mode) may reduce both temperature and humidity of the outdoor air drawn into the indoor space.

The refrigerant discharged from the second heat exchanger 130 may flow into the accumulator 212 through the four-way valve 213. The refrigerant may flow from the accumulator 212 to the compressor 211.

The air supplied into the indoor space by the ventilation apparatus 100 operating in the cooling dehumidification mode (first mode) may have temperature and humidity that makes a user feel pleasant. The ventilation apparatus 100 operating in the cooling dehumidification mode (first mode) may discharge the cool and dry air into the indoor space.

The constant temperature dehumidification mode (second mode) is now described. In the constant temperature dehumidification mode (second mode), the refrigerant compressed by the compressor 211 may be first supplied to the outdoor heat exchanger 220 through the four-way valve 213, and then supplied to the first heat exchanger 120 through the first expansion device 160.

In the constant temperature dehumidification mode (second mode), the first expansion device 160 may not expand the refrigerant. The second expansion device 170 may expand the refrigerant. The high temperature, high pressure refrigerant discharged from the compressor 211 may be condensed in the outdoor heat exchanger 220 of the outdoor unit 200, and then flow into the first heat exchanger 120. The first heat exchanger 120 receiving the refrigerant may condense the refrigerant. The high temperature, high pressure refrigerant discharged from the first heat exchanger 120 may be expanded to low temperature, low pressure refrigerant by the second expansion device 170. The expanded refrigerant may flow into the second heat exchanger 130 and may be evaporated by absorbing heat from air passing through the second heat exchanger 130.

The refrigerant discharged from the second heat exchanger 130 may flow into the accumulator 212 through the four-way valve 213. The refrigerant may flow from the accumulator 212 to the compressor 211.

In the constant temperature dehumidification mode (second mode), the outdoor air flowing in through the first inlet 101a may pass through the second heat exchanger 130 and the first heat exchanger 120 in sequence. The second heat exchanger 130 may condense and remove moisture contained in air passing through the second heat exchanger 130 and may cool and dry the air passing through the second heat exchanger 130. The first heat exchanger 120 may heat the air from which the moisture is removed by the second heat exchanger 130 by condensing the refrigerant. The air that has been cooled by passing through the second heat exchanger 130 may be heated again by the first heat exchanger 120, and thus the temperature may rise higher than when the air passes through the second heat exchanger 130.

A relative humidity of the air that has passed through the second heat exchanger 130 and the first heat exchanger 120 may be further reduced than a relative humidity of air that has passed only through the second heat exchanger 130. Accordingly, air having temperature and humidity that makes a user feel pleasant may be supplied to the indoor space. The ventilation apparatus 100 operating in the constant temperature dehumidification mode (second mode) may discharge dry air having the same or similar temperature to the indoor temperature into the indoor space.

The moisture recovery mode (third mode) is now described. A flow direction of the refrigerant in the moisture recovery mode (mode 3) may be opposite to a flow direction of the refrigerant in the cooling dehumidification mode (first mode) and the constant temperature dehumidification mode (second mode).

In the moisture recovery mode (third mode), the refrigerant compressed by the compressor 211 may be supplied to the second heat exchanger 130 through the four-way valve 213. The refrigerant may pass through the second heat exchanger 130, the first heat exchanger 120, and the outdoor heat exchanger 220 in sequence. In the moisture recovery mode (third mode), the high-temperature, high-pressure gaseous refrigerant compressed by the compressor 211 may be supplied to the second heat exchanger 130. The refrigerant may release heat while passing through the second heat exchanger 130, and the surrounding air may absorb the heat and be heated.

In the moisture recovery mode (third mode), the second expansion device 170 may not expand the refrigerant. In a case where the refrigerant is expanded by the second expansion device 170, a temperature and pressure of the refrigerant may decrease. However, in a case where the second expansion device 170 does not expand the refrigerant, the refrigerant flowing into the first heat exchanger 130 may have a relatively high pressure and high temperature. Accordingly, the refrigerant may release heat again while passing through the first heat exchanger 130 and heat the surrounding air. In the moisture recovery mode (third mode), the first expansion device 160 may be controlled to expand or not expand the refrigerant.

Because the outdoor air flowing in through the first inlet 101a passes through the second heat exchanger 130 and the first heat exchanger 120 in sequence, in the moisture recovery mode (third mode), the outdoor air may be first heated in the second heat exchanger 130 and then heated again in the first heat exchanger 120. The ventilation apparatus 100 operating in the moisture recovery mode (third mode) may discharge the heated air into the indoor space.

The refrigerant discharged from the first heat exchanger 120 may be expanded by the first expansion device 160 and may return to the compressor 211 through the outdoor heat exchanger 220, the four-way valve 213, and the accumulator 212.

In a case where freezing of the total heat exchanger 110 is expected, the ventilation apparatus 100 may operate in the moisture recovery mode (third mode). For example, in winter when a low-temperature and dry outdoor environment is created, freezing of the total heat exchanger 110 due to a low outdoor temperature may cause challenging ventilation of room air through the total heat exchanger 110 and challenging recovery of moisture contained in the room air. Operating the ventilation apparatus 100 in the moisture recovery mode (third mode) may prevent and/or reduce freezing of the total heat exchanger 110, thereby allowing ventilation and recovery of moisture contained in the room air using the total heat exchanger 110.

In the ventilation mode (fourth mode), the refrigerant may not be supplied to the first heat exchanger 120 and the second heat exchanger 130, and only heat exchange between the outdoor air and the room air may be performed by the total heat exchanger 110. The processor 192 may stop the compressor 211 of the outdoor unit 200 to block an inflow of the refrigerant into the ventilation apparatus 100, or may control the expansion device to block an inflow of the refrigerant into the first heat exchanger 120 and the second heat exchanger 130, or may turn off the outdoor unit 200 to operate the ventilation apparatus 100 in the ventilation mode (fourth mode). Even in the ventilation mode, moisture contained in the room air may be recovered.

In a case where the inflow of outdoor air is blocked, an operation mode of the ventilation system 1 may be determined as a cooling dehumidification mode for drying and cooling the room air, a constant temperature dehumidification mode for drying and heating the room air, a heating mode for heating the room air, or a blowing mode for circulating the room air. The ventilation apparatus 100 may operate in one of the cooling dehumidification mode, the constant temperature dehumidification mode, the heating mode, or the blowing mode based on an indoor humidity and an indoor temperature. The third damper 350 may be closed to block the inflow of outdoor air. In addition, the first blower 109a may operate, and the second blower 109b may be stopped.

In a case where the inflow of outdoor air is blocked, a flow of refrigerant in the cooling dehumidification mode and the constant temperature dehumidification mode may be the same as described above. A flow of refrigerant in the heating mode may be the same as the above-described refrigerant flow in the moisture recovery mode. In the blowing mode, the operation of the compressor may be stopped.

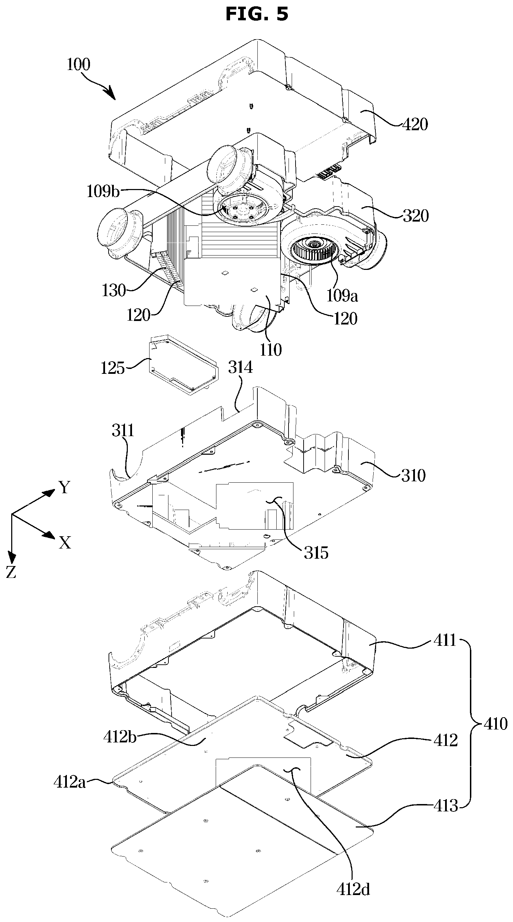

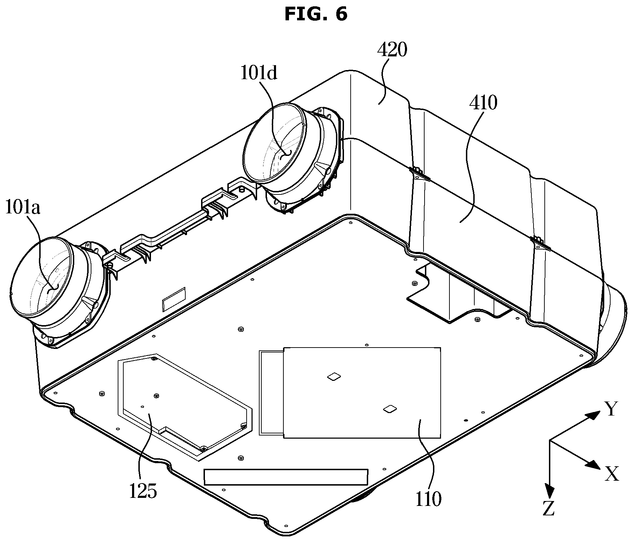

FIG. 5 is an exploded perspective view of a ventilation apparatus according to various embodiments. FIG. 6 is a perspective view of a ventilation apparatus with various components removed therefrom, viewed from below, according to various embodiments.

Referring to FIG. 5, the ventilation apparatus 100 may include a drain tray 125 for collecting condensate water produced from the heat exchangers 120 and 130. The drain tray 125 may be disposed below the heat exchangers 120 and 130 in the vertical direction Z.

The housing 101 may include a first inner housing 310 and the second inner housing 320. The second inner housing 320 may be coupled to the first inner housing 310 in the vertical direction Z. The inner housings 310 and 320 may be formed of an insulation material. For example, the inner housings 310 and 320 may be formed of an Expanded Polystyrene Insulation (EPS) material such as polystyrene, without being limited thereto. The inner housings 310 and 320 may be formed of various insulation materials to keep the air flowing in the intake flow path 102 and the discharge flow path 103 at a constant temperature.

The ventilation apparatus 100 may include covers 410 and 420 provided to form an exterior of the housing 101 and cover the inner housings 310 and 320. The covers 410 and 420 may include the first cover 410 disposed below in the vertical direction Z and the second cover 420 disposed above and coupled to the first cover 410. The first cover 410 may form a lower exterior of the ventilation apparatus 100, and the second cover 420 may form an upper exterior of the ventilation apparatus 100. The covers 410 and 420 may protect the inner housings 310 and 320 from the outside by covering the inner housings 310 and 320. For example, the covers 410 and 420 may be made of an injection-molded material such as plastic.

The first inner housing 310 may be inserted to the first cover 410, and the second inner housing 320 may be inserted to the second cover 420. From bottom to top of the ventilation apparatus 100, the first cover 410, the first inner housing 310, the second inner housing 320, and the second cover 420 may be arranged in sequence.

The components of the ventilation apparatus 100 such as the total heat exchanger 110, the blowers 109a and 109b, the heat exchangers 120 and 130, and the drain tray 125 may be disposed to be supported by the first inner housing 310 and the second inner housing 320.

A first hole 315 may be formed on the first inner housing 310. The total heat exchanger 110 and the drain tray 125 may be arranged to be separable from the ventilation apparatus 100 through the first hole 315 of the first inner housing 310. The second inner housing 320 may include a second hole 325 formed to match the first hole 315 of the first inner housing 310.

The first cover 410 may include a body part 411 shaped like a rectangular frame, a plane part 412 detachably coupled to the body part 411 and shaped like a plate, and a lower cover part 413 arranged to cover the plane part 412 from the bottom. The plane part 412 of the first cover 410 may include a plate body 412a, a first side 412b of the plate body 412a, and a second side arranged on the other side of the first side 412b.

The plane part 412 of the first cover 410 may include a third hole 412d formed to match the first hole 315 of the first inner housing 310. The third hole 412d may be formed on the plate body 412a. Because the third hole 412d is formed to match the first hole 315, the third hole 412d may be asymmetrically formed on the plate body 412a around one of the long axis L and the short axis S of the housing 101.

The plane part 412 of the first cover 410 may be coupled to the body part 411 to make the first side 412b face down. The first hole 315 and the third hole 412d may be provided in the same shape and arranged to overlap each other in the vertical direction Z.

Referring to FIG. 6, when the lower cover part 413 is separated from the first cover 410, the total heat exchanger 110 and the drain tray 125 may be exposed downward of the ventilation apparatus 100. Accordingly, a user may easily separate the total heat exchanger 110 and the drain tray 125 from the ventilation apparatus 100.

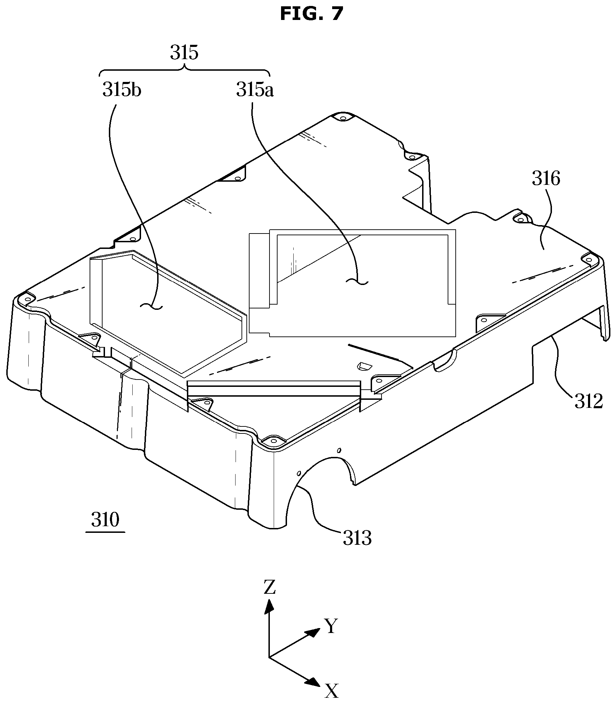

FIG. 7 is a perspective view illustrating a first inner housing of the ventilation apparatus shown in FIG. 5, which is upside down, according to various embodiments.

Referring to FIG. 5 and FIG. 7, the first inner housing 310 may include a first inlet forming part 311 forming a portion of the first inlet 101a, a first outlet forming part 312 forming a portion of the first outlet 101b, a second inlet forming part 313 forming a portion of the second inlet 101c, and a second outlet forming part 314 forming a portion of the second outlet 101d. The first outlet forming part 312 and the second outlet forming part 314 may be formed to be symmetrical to each other about the long axis L of the ventilation apparatus 100. The first inlet forming part 311 and the second inlet forming part 313 may also be formed to be symmetrical to each other about the long axis L of the ventilation apparatus 100.

The first hole 315 formed for the total heat exchanger 110 and the drain tray 125 to be taken out may be divided into a first section 315a from which the total heat exchanger 110 is taken out and a second section 315b from which the drain tray 125 is taken out. Although the first section 315a and the second section 315b of the first hole 315 are shown as being connected to each other, they are not limited thereto. The first section 315a and the second section 315b may be separated from each other.

The total heat exchanger 110 may be shaped like a regular hexahedron. The total heat exchanger 110 may be formed to have a square cross-section, and the first section 315a of the first hole 315 may be formed to have a rectangular shape. Through the first section 315a of the first hole 315, the total heat exchanger 110 may be exposed to the outside.

The second section 315b of the first hole 315 may be formed to have a shape matching the shape of the drain tray 125. For example, the second section 315b may be formed to have a polygonal shape, but it is not limited thereto, and may have various shapes.

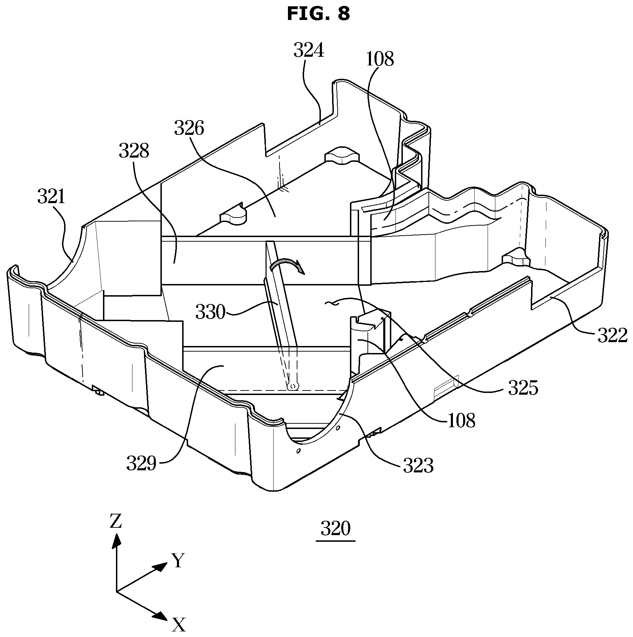

FIG. 8 is a perspective view illustrating a second inner housing of the ventilation apparatus shown in FIG. 5, which is upside down, according to various embodiments.

Referring to FIG. 8, the second inner housing 320 may include a first inlet forming part 321 forming a portion of the first inlet 101a, a first outlet forming part 322 forming a portion of the first outlet 101b, a second inlet forming part 323 forming a portion of the second inlet 101c, and a second outlet forming part 324 forming a portion of the second outlet 101d. The first outlet forming part 322 and the second outlet forming part 324 may be formed to be symmetrical to each other. The first inlet forming part 321 and the second inlet forming part 323 may also be formed to be symmetrical to each other.

The first inner housing 310 and the second inner housing 320 are assembled in the vertical direction Z, thereby forming the first inlet 101a, the first outlet 101b, the second inlet 101c, and the second outlet 101d. A side 316 of the first inner housing 310 and the other side 326 of the second inner housing 320 are arranged in parallel, and thus the first hole 315 of the first inner housing 310 and the second hole 325 of the second inner housing 320 are in parallel.

Assuming, in the front-back direction X, a side on which the first inlet 101a and the second outlet 101d are formed is referred to as one side of the housing 101, and a side on which the second inlet 101c and the first outlet 101b are formed is referred to as the other side of the housing 101, the heat exchangers 120 and 130 may be positioned to be adjacent to the one side of the housing 101.

The first intake room 104, the second intake room 106, the first discharge room 105, and the second discharge room 107 may be separated by the partitions 108 formed by the first inner housing 310 and the second inner housing 320. In addition, the partitions 108 may function to support the total heat exchanger 110 and the heat exchangers 120 and 130.

An upper side of the total heat exchanger 110 may be spaced apart from the other side 326 of the second inner housing 320. A vertical distance between the upper side of the total heat exchanger 110 and the other side 326 of the second inner housing 320 may vary depending on the design. A size of a space between the upper side of the total heat exchanger 110 and the other side 326 of the second inner housing 320 may also vary depending on the design.

The first molding 328 and the second molding 329 may be arranged between the upper side of the total heat exchanger 110 and the other side 326 of the second inner housing 320. The first molding 328 and the second molding 329 may prevent and/or reduce the room air flowing in from the second inlet 101c from flowing to the second outlet 101d through the upper space of the total heat exchanger 110. However, the outdoor air flowing in from the first inlet 101a may flow to the first outlet 101b through the upper space of the total heat exchanger 110.

The first damper 330 may be provided in the second inner housing 320. By coupling the first inner housing 310 to the second inner housing 320, the first damper 330 may be located at the upper portion of the total heat exchanger 110. The first damper 330 may open or close the bypass flow path 331 formed between the first inlet 101a and the first outlet 101b.

Although it is illustrated in FIG. 8 that the first damper 330 is positioned at the upper portion of the total heat exchanger 110, the disclosure is not limited thereto. The first damper 330 may be positioned at the lower portion of the total heat exchanger 110.

Opening of the first damper 330 may allow the outdoor air drawn in from the first inlet 101a to flow to the first outlet 101b through the bypass flow path 331 formed between the upper side of the total heat exchanger 110 and the second inner housing 320. In this case, the outdoor air may not pass through the total heat exchanger 110 due to a difference in flow rate.

The first damper 330 may be positioned between the first molding 328 and the second molding 329, and may be supported by the first molding 328 and the second molding 329. The first damper 330 may be disposed vertically to the first molding 328 and the second molding 329, and may be rotatable. The first damper 330 may be provided in a rectangular shape. The first damper 330 may be rotated in a direction toward the first intake room 104 or toward the first discharge room 105.

In a case where the ventilation apparatus 100 operates in the cooling dehumidification mode (first mode), the ventilation apparatus 100 may open the first damper 330 based on a temperature of the room air being higher than a temperature of air passing through the heat exchangers 120 and 130. In a case where the temperature of the room air is higher than the temperature of the air cooled in the heat exchangers 120 and 130, a cooling effect may be increased by preventing/reducing the cooled air from passing through the total heat exchanger 110. In a case where the cooled air and the room air exchange heat in the total heat exchanger 110, the cooling effect may be reduced. Accordingly, in a case where the temperature of the room air is relatively high in the cooling dehumidification mode (first mode), it is preferable to allow the outdoor air drawn in through the first inlet 101a to flow to the bypass flow path 331.

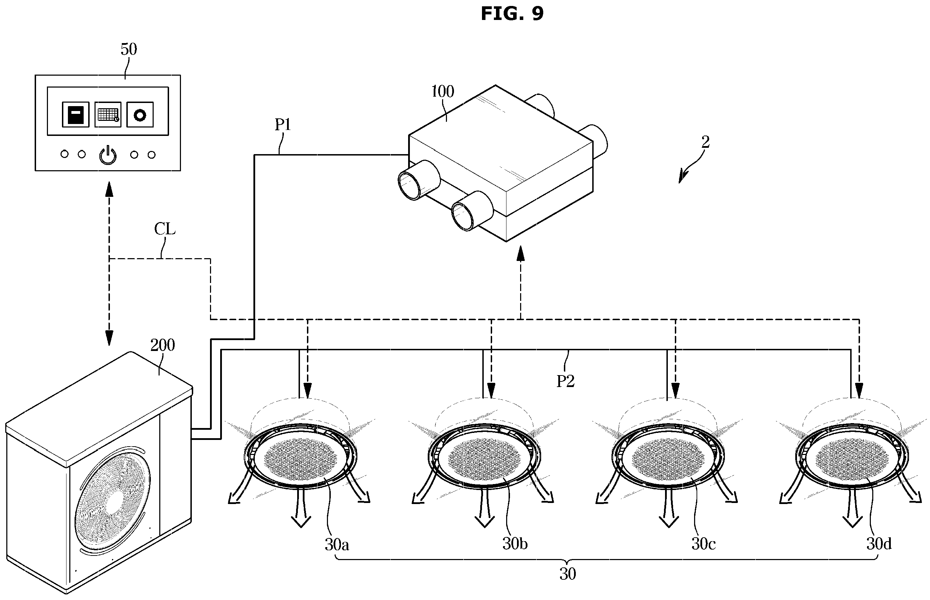

FIG. 9 is a diagram illustrating an example integrated air conditioning system including a ventilation apparatus according to various embodiments.

Referring to FIG. 9, an integrated air conditioning system 2 may include the ventilation apparatus 100, the outdoor unit 200, a plurality of indoor units 30 (30a, 30b, 30c and 30d) and an integrated controller 50. The ventilation apparatus 100 may be connected to the outdoor unit 200 by a refrigerant pipe P1. The refrigerant pipe P1 may correspond to the first refrigerant pipe 121 described above. The plurality of indoor units 30 may be connected to the outdoor unit 200 by a refrigerant pipe P2. The outdoor unit 200 may supply the refrigerant to each of the plurality of indoor units 30 through the refrigerant pipe P2.

The plurality of indoor units 30 may be installed in a plurality of different indoor spaces, respectively. For example, each of the plurality of indoor units 30 may be installed in a plurality of offices, a plurality of guest rooms or a plurality of rooms separated in a building. As the plurality of indoor units 30 operate, respectively, air in the indoor space where each of the plurality of indoor units 30 is installed may be directly conditioned (e.g., cooled).

The ventilation apparatus 100 may be installed in many different spaces in a building. For example, the ventilation apparatus 100 may be installed in a space such as an apartment balcony or a utility room. The first inlet 101a, the second inlet 101c, the first outlet 101b and the second outlet 101d formed in the housing 101 of the ventilation apparatus 100 may be connected to the respective ducts. A duct connected to the second inlet 101c and the first outlet 101b may extend up to the indoor space. For example, there may be a hole formed on a ceiling or a wall of the indoor space to be connected to the ventilation apparatus 100. A duct connected to the first inlet 101a and the second outlet 101d may extend up to the outdoor space.

Although the ventilation apparatus 100 and the outdoor unit 200 are each illustrated as being one, one or more ventilation apparatuses 100 and outdoor units 200 may be provided. **In** addition, the indoor unit 30 is illustrated as being four, but the number of indoor units 30 is not limited to the illustrated number. More than one indoor unit 30 may be provided.

The integrated controller 50 may be electrically connected to the ventilation apparatus 100, the outdoor unit 200, and the plurality of indoor units 30. The integrated controller 50 may be electrically connected to the ventilation apparatus 100, the outdoor unit 200, and the plurality of indoor units 30 through a communication line (CL). The integrated controller 50 may control operations of the ventilation apparatus 100, the outdoor unit 200, and the plurality of indoor units 30.

The integrated controller 50 may obtain a user input, and in response to the user input, may operate the integrated air conditioning system 2, and may display information of the integrated air conditioning system 2. The integrated controller 50 may control the ventilation apparatus 100 and the indoor unit 30 based on an indoor temperature and an indoor humidity in the indoor space where the indoor unit 30 is placed.

Cooling efficiency and dehumidification efficiency may increase and energy for cooling and dehumidification may be saved by adequately controlling operations of the ventilation apparatus 100 and the indoor unit 300 based on the indoor temperature and the indoor humidity.

The above-described operation method of the ventilation apparatus 100 may also be used in the integrated air conditioning system 2 described in FIG. 9.

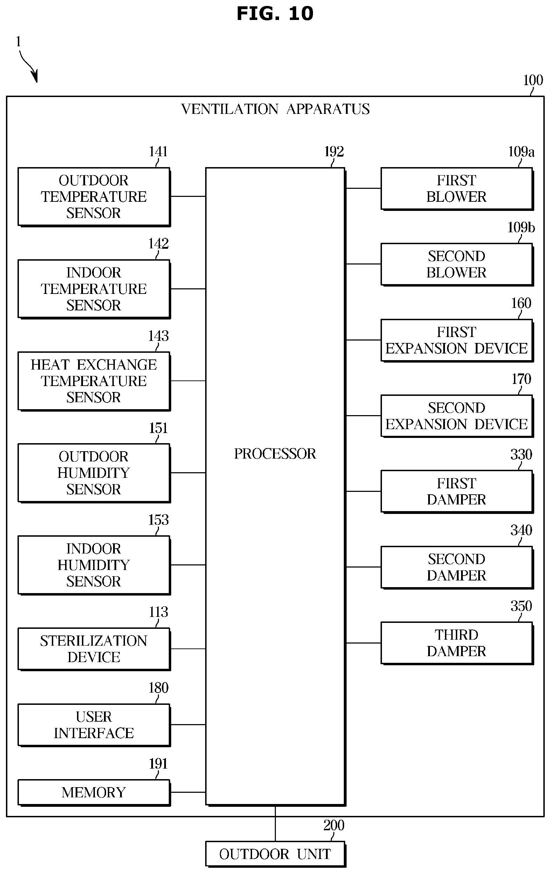

FIG. 10 is a block diagram illustrating an example configuration of a ventilation apparatus according to various embodiments.

Referring to FIG. 10, the ventilation apparatus 100 may include the outdoor temperature sensor 141, the indoor temperature sensor 142, the heat exchange temperature sensor 143, the outdoor humidity sensor 151, the indoor humidity sensor 152, the sterilization device (e.g., including at least one of a heater, an infrared lamp, or a Ultraviolet Light Emitting Diode) 113, the first blower 109a, the second blower 109b, the first expansion device (e.g., including a valve) 160, the second expansion device (e.g., including a valve) 170, and the first damper 330. The ventilation apparatus 100 may further include the second damper 340 and the third damper 350.

In addition, the ventilation apparatus 100 may include a user interface (e.g., including interface circuitry) 180, memory 191 and a processor (e.g., including processing circuitry) 192. The processor 192 may be electrically connected to the components of the ventilation apparatus 100 to control the respective components. For example, the processor 192 may adjust an opening degree of each of the first damper 330, the second damper 340, and the third damper 350.

The memory 191 may record/store various information required for operation of the ventilation apparatus 100. The memory 191 may store instructions, an application, data and/or a program required for operation of the ventilation apparatus 100. The processor 192 may generate control signals for controlling operation of the ventilation apparatus 100 based on the instructions, application, data and/or program stored in the memory 191. The processor 192 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The ventilation apparatus 100 may further include a communication interface for communicating with the outdoor unit 200 and/or the integrated controller 50. The ventilation apparatus 100 may also operate based on a control signal transmitted from the integrated controller 50 via the communication interface.

The outdoor temperature sensor 141 may detect a first temperature (outdoor temperature) of outdoor air and transmit an electrical signal corresponding to the detected first temperature to the processor 192. The outdoor temperature sensor 141 may be referred to as a first temperature sensor. The indoor temperature sensor 142 may detect a second temperature (indoor temperature) of room air and transmit an electrical signal corresponding to the detected second temperature to the processor 192. The indoor temperature sensor 142 may be referred to as a second temperature sensor. The heat exchange temperature sensor 143 may detect a temperature of air passing through the first heat exchanger 120 and the second heat exchanger 130, and transmit an electrical signal corresponding to the detected temperature to the processor 192. The heat exchange temperature sensor 143 may be referred to as a third temperature sensor.

The outdoor humidity sensor 151 may detect a first humidity (outdoor humidity) of the outdoor air and transmit an electrical signal corresponding to the detected first humidity to the processor 192. The indoor humidity sensor 152 may detect a second humidity (indoor humidity) of the room air and transmit an electrical signal corresponding to the detected second humidity to the processor 192. The outdoor humidity sensor 151 may be referred to as a first humidity sensor. The indoor humidity sensor 152 may be referred to as a second humidity sensor.

The processor 192 may determine a difference value (first difference value) between the first humidity of the outdoor air and the second humidity of the room air. The processor 192 may determine a difference value (second difference value) between the first temperature of the outdoor air and the second temperature of the room air. The processor 192 may determine an operation mode of the ventilation system 1 based on the first humidity of the outdoor air, the second humidity of the room air, the first temperature of the outdoor air, and the second temperature of the room air.

The sterilization device 113 may sterilize the room air drawn in through the second inlet 101c. For example, the sterilization device 113 may include at least one of a heater, an infrared lamp, or a UV-LED. The processor 192 may control ON or OFF of the sterilization device 113.

The first blower 109a may be disposed on the first outlet 101b side of the housing 101 and may generate wind power required to discharge air through the first outlet 101b. The second blower 109b may be disposed on the second outlet 101d side of the housing 101 and may generate wind power required to discharge air through the second outlet 101d. The processor 192 may control a rotation speed of the first blower 109a and a rotation speed of the second blower 109b. The processor 192 may control the first blower 109a and the second blower 109b based on the operation mode of the ventilation system 1.

The first expansion device 160 may include a valve and selectively expand the refrigerant supplied to the first heat exchanger 120. The second expansion device 170 may include a valve and selectively expand the refrigerant discharged from the first heat exchanger 120 and supplied to the second heat exchanger 130 through the second refrigerant pipe 131. The processor 192 may adjust an opening degree of each of the first expansion device 160 and the second expansion device 170. The processor 192 may control the compressor 211, the four-way valve 213, the first expansion device 160, and the second expansion device 170 based on the operation mode of the ventilation system 1.

The first damper 330 may be positioned at an upper portion of the total heat exchanger 110. The first damper 330 may also be positioned at a lower portion of the total heat exchanger 110. The first damper 330 may open or close the bypass flow path 331 formed between the first inlet 101a and the first outlet 101b. The processor 192 may control the opening or closing of the first damper 330. The processor 192 may also adjust an opening degree of the first damper 330. The processor 192 may control the first damper 330 based on the operation mode of the ventilation system 1.

The user interface 180 may include various circuitry and obtain various user inputs about operations of the ventilation apparatus 100. The user interface 180 may output an electrical signal (voltage or current) corresponding to a user input to the processor 192 of the ventilation apparatus 100. The user interface 180 may include various buttons, a dial and/or a touch display.

For example, the user interface 180 may obtain user input for setting to allow or block an inflow of outdoor air. In other words, the user interface 180 may obtain a user input for setting an outdoor air circulation or an indoor air circulation. According to the user input, the outdoor air circulation or the indoor air circulation may be selected. The outdoor air circulation or the indoor air circulation may also be automatically set based on the outdoor temperature, indoor temperature, outdoor humidity, and/or indoor humidity.

Upon selection of the outdoor air circulation, the processor 192 may close the second damper 340 positioned between the first intake room 104 and the first discharge room 105, and open the third damper 350 positioned at the first inlet 101a. Upon selection of the indoor air circulation, the processor 192 may open the second damper 340 positioned between the first intake room 104 and the first discharge room 105 and close the third damper 350 positioned at the first inlet 101a.

In addition, the user interface 180 may display various information about operations of the ventilation apparatus 100. For example, the user interface 180 may display images, text, and/or graphic user interface about operations of the ventilation apparatus 100. The user interface 180 may include various types of display panels.

In a case where outdoor air is introduced into the total heat exchanger 110 by the outdoor air circulation, moisture contained in the outdoor air may be absorbed into the total heat exchanger 110. The accumulation of a large amount of moisture in the total heat exchanger 110 may cause mold and/or bacteria in the total heat exchanger 110. In addition, in summer when a high temperature and high humidity environment is created, moisture from the outside to the indoor space may deteriorate the indoor environment. In the ventilation apparatus 100 according to the disclosure, the heat exchangers 120 and 130 may be disposed at the first inlet 101a side of the housing 101 through which the outdoor air is drawn, thereby removing moisture contained in the outdoor air before the outdoor air flows into the total heat exchanger 110.

For the outdoor air circulation, the processor 192 of the ventilation system 1 may close the second damper 340 positioned between the first intake room 104 and the first discharge room 105, and open the third damper 350 positioned at the first inlet 101a. In a case where the first difference value between the first humidity of the outdoor air and the second humidity of the room air is greater than a first reference value, the processor 192 of the ventilation system 1 may determine the operation mode of the ventilation system 1 as the cooling dehumidification mode (first mode) or the constant temperature dehumidification mode (second mode), based on whether the second difference value between the first temperature of the outdoor air and the second temperature of the room air is greater than a second reference value.

The processor 192 may determine the operation mode of the ventilation system as the cooling dehumidification mode (first mode), based on the first difference value between the first humidity of the outdoor air and the second humidity of the room air being greater than the first reference value and the second difference value between the first temperature of the outdoor air and the second temperature of the room air being greater than the second reference value. In other words, in a case where the outdoor humidity is higher than the indoor humidity and the outdoor temperature is higher than the indoor temperature, the ventilation system 1 may operate in the cooling dehumidification mode to remove moisture contained in the outdoor air flowing into the housing 101 and reduce the temperature of the outdoor air.

The processor 192 may adjust an opening degree of the first expansion device 160 to allow the refrigerant to be expanded by the first expansion device 160 in the cooling dehumidification mode (first mode). In the cooling dehumidification mode (first mode), the second expansion device 170 may be controlled to expand or not expand the refrigerant.

The first reference value for the difference between the outdoor humidity and the indoor humidity and the second reference value for the difference between the outdoor temperature and the indoor temperature may be varied depending on the design. In addition, the first reference value and the second reference value may be changed according to a user input through the user interface 180. For example, the first reference value and the second reference value may each be 0.

In addition, in a case where the ventilation system 1 operates in the cooling dehumidification mode (first mode), the processor 192 may open the first damper 330 to open the bypass flow path 331. The processor 192 may open the first damper 330 based on the second temperature of the room air being higher than the third temperature detected by the heat exchange temperature sensor 143 in the cooling dehumidification mode (first mode).

In a case where the temperature of the room air is higher than a temperature of air cooled in the heat exchangers 120 and 130, a cooling effect may be increased by preventing/reducing the cooled air from passing through the total heat exchanger 110. In a case where the cooled air and the room air exchange heat in the total heat exchanger 110, the cooling effect may be reduced. Accordingly, in a case where the temperature of the room air is relatively high in the cooling dehumidification mode (first mode), it is preferable to allow the outdoor air drawn in through the first inlet 101a to flow to the bypass flow path 331.

The processor 192 may determine the operation mode of the ventilation system 1 as the constant temperature dehumidification mode (second mode), based on the first difference value between the first humidity of the outdoor air and the second humidity of the room air being greater than the first reference value and the second difference value between the first temperature of the outdoor air and the second temperature of the room air being less than or equal to the second reference value. In other words, in a case where the outdoor humidity is higher than the indoor humidity but the outdoor temperature is lower than or equal to the indoor temperature, moisture contained in the room air is required to be removed, but the temperature of the outdoor air is not required to be reduced. Accordingly, the ventilation system 1 may operate in the constant temperature dehumidification mode to remove moisture contained in the outdoor air flowing into the housing 101 and maintain the indoor temperature.

The processor 192 may adjust an opening degree of the second expansion device 170 to allow the refrigerant to be expanded by the second expansion device 170 without expansion of the refrigerant by the first expansion device 160 in the constant temperature dehumidification mode (second mode). In the constant temperature dehumidification mode (second mode), the first expansion device 160 may be controlled to not expand the refrigerant.

In a case where the first difference value between the first humidity of the outdoor air and the second humidity of the room air is less than or equal to the first reference value, the processor 192 may determine the operation mode of the ventilation system 1 as the moisture recovery mode (third mode) or the ventilation mode (fourth mode), based on whether the first temperature of the outdoor air is lower than a reference temperature.

The reference temperature may be varied depending on the design. In addition, the reference temperature may be changed according to a user input through the user interface 180. For example, the reference temperature may be 0 degrees.

The processor 192 may determine the operation mode of the ventilation system 1 as the moisture recovery mode (third mode), based on the first difference value between the first humidity of the outdoor air and the second humidity of the room air being less than or equal to the first reference value and the first temperature of the outdoor air being lower than the reference temperature. In a case where the outdoor humidity is lower than the indoor humidity and the outdoor temperature is lower than the reference temperature, dehumidification of the outdoor air is not required and freezing prevention/reduction of the total heat exchanger 110 may be required. Accordingly, the ventilation system 1 may operate in the moisture recovery mode to increase the temperature of the outdoor air supplied to the total heat exchanger 110.

Even though the temperature of the outdoor air is below zero degrees Celsius, freezing of the total heat exchanger 110 does not occur, and thus the total heat exchanger 110 may be used and moisture contained in the room air passing through the total heat exchanger 110 may be recovered back into the indoor space. Accordingly, the indoor humidity may be adequately maintained even in the dry winter.

The processor 192 may control the second expansion device 170 to not expand the refrigerant in the moisture recovery mode (third mode). In the moisture recovery mode (third mode), the first expansion device 160 may be controlled to expand or not expand the refrigerant.

The processor 192 may determine the operation mode of the ventilation system 1 as the ventilation mode (fourth mode), based on the first difference value between the first humidity of the outdoor air and the second humidity of the room air being less than or equal to the first reference value and the first temperature of the outdoor air being higher than or equal to the reference temperature. In a case where the outdoor humidity is lower than the indoor humidity, dehumidification of the outdoor air may not be required, and in a case where the outdoor temperature is above zero degrees Celsius, freezing of the total heat exchanger 110 may not occur. In this case, heat exchange between the outdoor air and the heat exchangers 120 and 130 may not be required. The ventilation system 1 may operate in the ventilation mode to stop the compressor 211 and perform ventilation using only the total heat exchanger 110.

By the indoor air circulation, moisture contained in the room air may be absorbed by the total heat exchanger 110. For the indoor air circulation, the processor 192 may open the second damper 340 positioned between the first intake room 104 and the first discharge room 105, and close the third damper 350 positioned at the first inlet 101a.

During the indoor air circulation, the processor 192 of the ventilation system 1 may determine the operation mode of the ventilation system 1 based on an indoor temperature, an indoor humidity, a target temperature, and a target humidity. The target temperature and the target humidity may be set by a user. The user may set the target temperature and the target humidity using the user interface 180 of the ventilation system 1 or the input interface 52 of the integrated controller 50. The target temperature and the target humidity may also be automatically set based on an outdoor environment and/or an indoor environment.

During the indoor air circulation, the processor 192 may determine the operation mode of the ventilation system 1 as the heating mode, based on the indoor temperature being lower than the target temperature. In contrast, in a case where the indoor temperature is higher than or equal to the target temperature, the processor 192 may determine the operation mode of the ventilation system 1 as the cooling dehumidification mode or the constant temperature dehumidification mode, based on the indoor humidity being higher than the target humidity.

In a case where the indoor temperature is higher than the target temperature and the indoor humidity is higher than the target humidity, the operation mode of the ventilation system 1 may be determined as the cooling dehumidification mode. In a case where the indoor temperature is equal to the target temperature and the indoor humidity is higher than the target humidity, the operation mode of the ventilation system 1 may be determined as the constant temperature dehumidification mode.

During the indoor air circulation, in a case where the indoor temperature is equal to or higher than the target temperature but the indoor humidity is equal to or lower than the target humidity, the processor 192 may determine the operation mode of the ventilation system 1 as the blowing mode.

The ventilation system 1 according to the disclosure may provide various operation modes based on the outdoor humidity, the indoor humidity, the outdoor temperature, and/or the indoor temperature. The ventilation system 1 according to the disclosure may remove moisture contained in the air before the outdoor air or the room air passes through the total heat exchanger 110, and may cool or heat the air. Accordingly, air with an appropriate humidity and temperature may be supplied to the indoor space. In addition, the ventilation system 1 according to the disclosure may prevent and/or reduce freezing of the total heat exchanger 110, thereby increasing the usability of the total heat exchanger 110 even in an environment with low outdoor temperature.

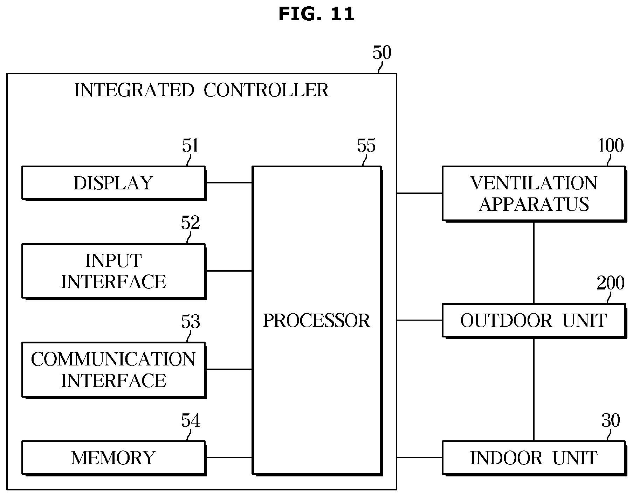

FIG. 11 is a block diagram illustrating an example configuration of an integrated controller according to various embodiments.

Referring to FIG. 11, the integrated controller 50 may include a display 51, an input interface (e.g., including various interface circuitry) 52, a communication interface (e.g., including communication circuitry) 53, and memory 54, and may include a processor (e.g., including processing circuitry) 55 electrically connected to the components. The integrated controller 50 may provide a user interface for interactions between the integrated air conditioning system 2 and the user.

The display 51 may display information about a state and/or operation of the integrated air conditioning system 2. The display 51 may display information input by the user or information to be provided for the user in various screens. The display 51 may display information about an operation of the integrated air conditioning system 2 in at least one of an image or text. In addition, the display 51 may display a Graphic User Interface (GUI) that enables the integrated air conditioning system 2 to be controlled. That is, the display 51 may display a user interface element (UI element) such as an icon.

The display 51 may include a display panel of various types. For example, and without limitation, the display 51 may include a Liquid Crystal Display (LCD) panel, a Light Emitting Diode (LED) panel, an Organic LED (OLED) panel, or a micro LED panel.

The display 51 may be implemented with a touch display. The touch display may include a display panel for displaying an image and a touch panel for receiving a touch input. The display panel may convert image data received from the processor 55 to an optical signal visible to the user. The touch panel may identify a touch input from the user and provide an electrical signal corresponding to the received touch input to the processor 55.

The input interface 52 of the integrated controller 50 may include various input circuitry and output an electrical signal (voltage or current) corresponding to the user input to the processor 55. The input interface 52 may include various buttons and even a dial. In a case where the display 51 is provided as a touch display, the input interface 52 may not be provided separately for the integrated controller 50. That is, the integrated controller 50 may obtain a user input. For example, the integrated controller 50 may obtain a user input to set a target temperature and a target humidity, a user input to turn on or turn off each of the indoor units 30 and the ventilation apparatus 100, or a user input to set an operation mode of each of the indoor units 30 and the ventilation apparatus 100.

The communication interface 53 may include various communication circuitry and perform communication with the ventilation apparatus 100, the outdoor unit 200, and the indoor units 30. The communication interface 53 of the integrated controller 50 may be connected to a communication interface of each of the indoor units 30, the ventilation apparatus 100, the outdoor unit 200 through the communication line (CL). The integrated controller 50 may transmit control signals to the ventilation apparatus 100, the outdoor unit 500, and the indoor units 30 through the communication interface 53.

**In** addition, the communication interface 53 may include a wired communication module and/or a wireless communication module to communicate with an external device (e.g., a mobile device, a computer). The wired communication module may communicate with an external device over a wide area network such as the Internet, and the wireless communication module may communicate with an external device through an access point connected to a wide area network. With this, the user may remotely control the integrated air conditioning system 2.

The memory 54 may record/store various information required for operation of the integrated air conditioning system 2. The memory 54 may store instructions, an application, data and/or a program required for operation of the integrated air conditioning system 2. For example, the memory 54 may store data about reference temperature and reference humidity for determining operations of the ventilation apparatus 100 and the indoor units 30.

The memory 54 may include a volatile memory for temporarily storing data, such as a Static Random Access Memory (SRAM), or a Dynamic Random Access Memory (DRAM). The memory 54 may also include a non-volatile memory for storing data for a long time, such as a Read-Only Memory (ROM), an Erasable Programmable ROM (EPROM), or an Electrically Erasable Programmable ROM (EEPROM).

The processor 55 may generate control signals for controlling operation of the integrated air conditioning system 2 based on the instructions, application, data and/or program stored in the memory 54. The processor 55 may include logic circuitry and operation circuitry in hardware. The processor 55 may process data according to the program and/or instructions provided from the memory 54, and generate a control signal based on the processing result. The processor 55 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The memory 54 and the processor 55 may be implemented in a single control circuit or in a plurality of circuits.

The components of the ventilation apparatus 100, the outdoor unit 200, the indoor unit 30 and the integrated controller 50 are not limited to the components as described above in FIG. 10 and FIG. 11. Some of the aforementioned components of each of the ventilation apparatus 100, the outdoor unit 200, the indoor unit 30, and the integrated controller 50 may be omitted, or other components may further be added.

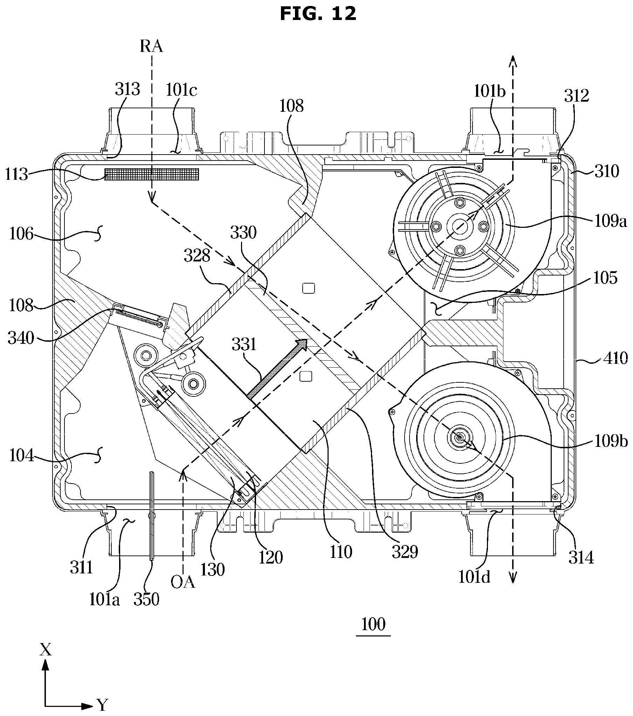

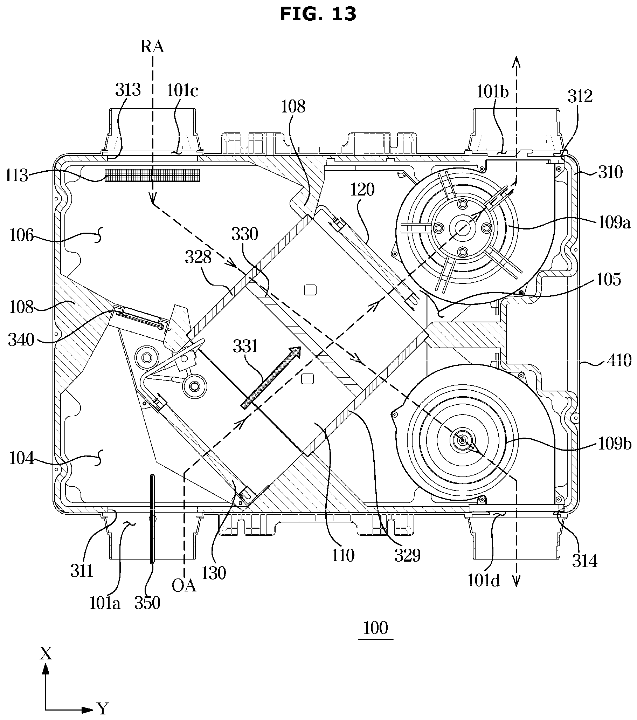

FIG. 12 is a diagram illustrating example flow of air passing through a heat exchanger in a ventilation apparatus during outdoor air circulation according to various embodiments. FIG. 13 is a diagram illustrating an example in which placement of heat exchangers is modified in the ventilation apparatus of FIG. 12 according to various embodiments.

Referring to FIG. 12 and FIG. 13, for outdoor air circulation, the processor 192 of the ventilation system 1 may close the second damper 340 positioned between the first intake room 104 and the first discharge room 105 and open the third damper 350 positioned at the first inlet 101a. In FIG. 12 and FIG. 13, the bypass flow path 331 may be closed by the first damper 330.

During the outdoor air circulation, the processor 192 of the ventilation apparatus 100 may operate the first blower 109a and the second blower 109b, in each of the cooling dehumidification mode (first mode), the constant temperature dehumidification mode (second mode), the moisture recovery mode (third mode), and the ventilation mode (fourth mode). According to an operation of the first blower 109a, outdoor air OA may be drawn into the housing 101 through the first inlet 101a of the housing 101.

In FIG. 12, the outdoor air OA may be introduced into the total heat exchanger 110 through the second heat exchanger 130 and the first heat exchanger 120. In FIG. 13, the outdoor air OA may be introduced into the first heat exchanger 120 through the second heat exchanger 130 and the total heat exchanger 110.

In a case where a refrigerant is supplied to the heat exchangers 120 and 130, the outdoor air OA may be cooled or heated by the heat exchangers 120 and 130. Moisture contained in the outdoor air OA may also be removed by the heat exchangers 120 and 130.

According to an operation of the second blower 109b, room air RA may be drawn into the housing 101 through the second inlet 101c of the housing 101. The drawn in room air RA may be introduced into the total heat exchanger 110.

The cooled or heated outdoor air OA and room air RA may exchange heat in the total heat exchanger 110 without contacting each other. The outdoor air OA that has passed through the heat exchangers 120 and 130 and the total heat exchanger 110 may be supplied to the indoor space through the first outlet 101b. The room air RA that has passed through the total heat exchanger 110 may be discharged to the outside through the second outlet 101d.

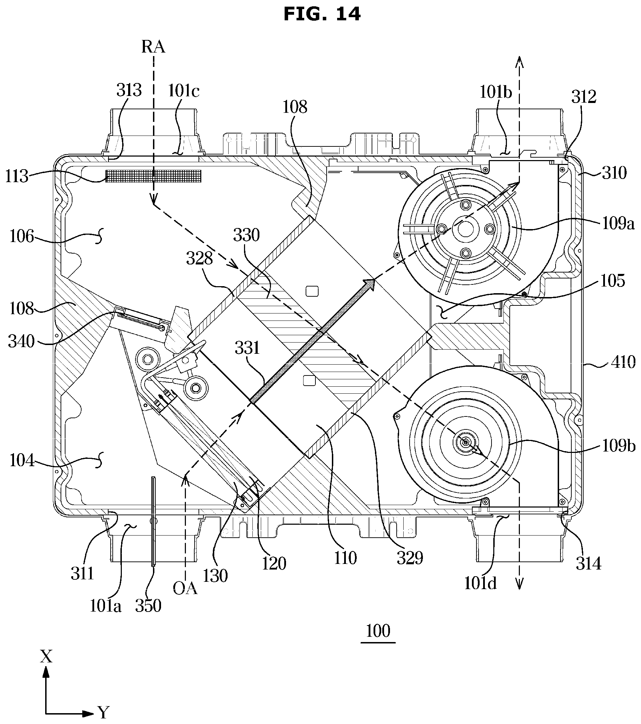

FIG. 14 is a diagram illustrating example flow of air passing through a bypass flow path in the ventilation apparatus of FIG. 12 according to various embodiments.

Referring to FIG. 14, in a case where the ventilation apparatus 100 operates in the cooling dehumidification mode (first mode), the first damper 330 may be opened to open the bypass flow path 331. As the first damper 330 is opened, the outdoor air OA introduced through the first inlet 101a may move to the first outlet 101b through the bypass flow path 331 formed above the total heat exchanger 110. In this case, the outdoor air OA may not pass through the total heat exchanger 110 due to a difference in flow rate. However, the room air RA introduced through the second inlet 101c may pass through the total heat exchanger 110.

The ventilation system 1 may open the first damper 330 based on a temperature of the room air being higher than a temperature of air passing through the heat exchangers 120 and 130. In a case where the temperature of the room air is higher than the temperature of the air cooled in the heat exchangers 120 and 130, a cooling effect may be increased by preventing/reducing heat exchange between the air cooled in the total heat exchanger 110 and the room air RA.

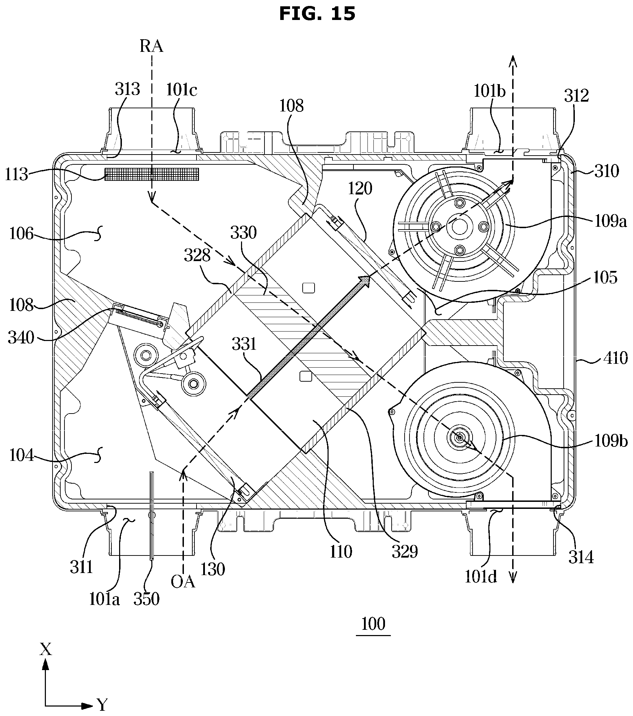

FIG. 15 is a diagram illustrating example flow of air passing through a bypass flow path in the ventilation apparatus of FIG. 13 according to various embodiments.

Referring to FIG. 15, because the second heat exchanger 130 is located at the first inlet 101a side but the first heat exchanger 120 is located between the total heat exchanger 110 and the first blower 109a, the bypass flow path 331 may be opened in the cooling dehumidification mode (first mode) and the constant temperature dehumidification mode (second mode). That is, in a case where the total heat exchanger 110 is positioned between the first heat exchanger 120 and the second heat exchanger 130, the first damper 330 may be opened to allow the bypass flow path 331 to be opened in the cooling dehumidification mode (first mode) and the constant temperature dehumidification mode (second mode) so as not to reduce a cooling effect of the air by the second heat exchanger 130.

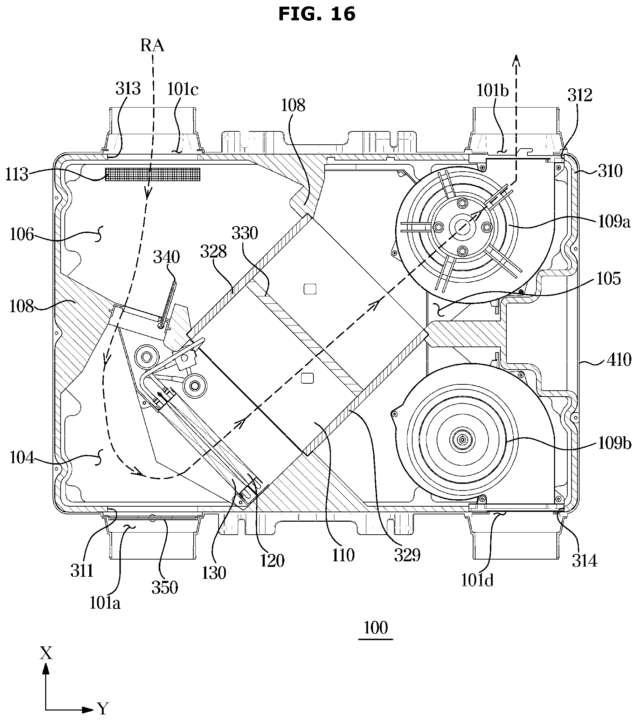

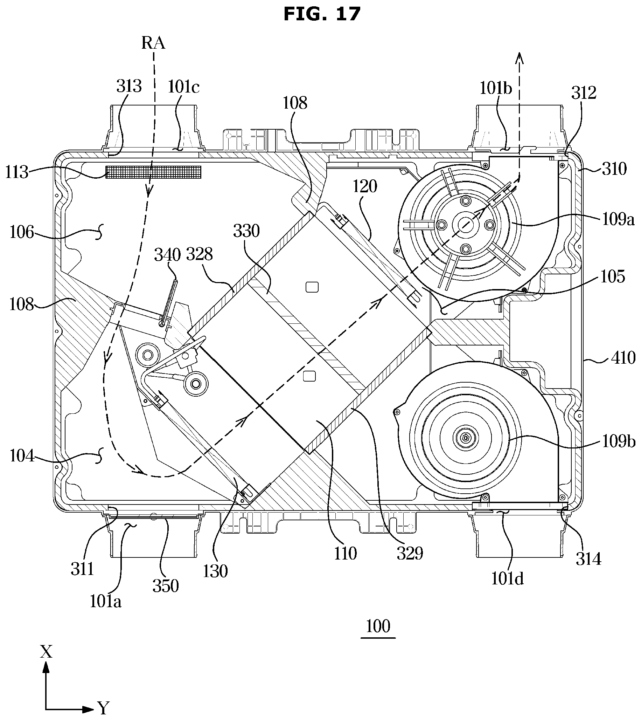

FIG. 16 is a diagram illustrating example flow of air in a ventilation apparatus during indoor air circulation according to various embodiments. FIG. 17 is a diagram illustrating an example in which placement of heat exchangers is modified in the ventilation apparatus of FIG. 16 according to various embodiments.

Referring to FIG. 16 and FIG. 17, for indoor air circulation, the processor 192 may open the second damper 340 positioned between the first intake room 104 and the first discharge room 105 and close the third damper 350 positioned at the first inlet 101a.

During the indoor air circulation, the processor 192 may operate the first blower 109a and stop the second blower 109b, in each of the cooling dehumidification mode, the constant temperature dehumidification mode, the heating mode, and the blower mode. According to the operation of the first blower 109a, room air RA may be drawn into the housing 101 through the second inlet 101c of the housing 101.

The room air RA may pass through the connection flow path opened by the second damper 340. In FIG. 16, the room air RA may be introduced into the total heat exchanger 110 through the second heat exchanger 130 and the first heat exchanger 120. In FIG. 17, the room air RA may be introduced into the first heat exchanger 120 through the second heat exchanger 130 and the total heat exchanger 110.

In a case where a refrigerant is supplied to the heat exchangers 120 and 130, the room air RA may be cooled or heated by the heat exchangers 120 and 130. Moisture contained in the room air RA may also be removed by the heat exchangers 120 and 130.

The room air RA that has passed through the heat exchangers 120 and 130 and the total heat exchanger 110 may be supplied to the indoor space through the first outlet 101b.

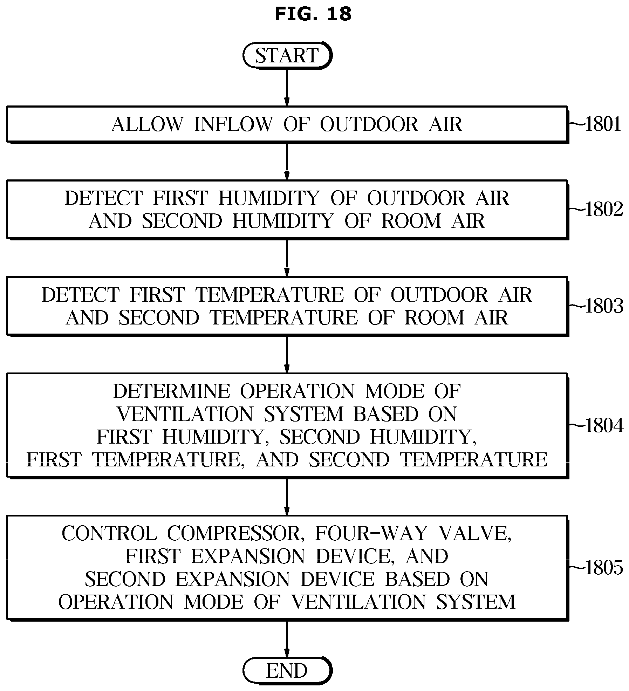

FIG. 18 is a flowchart illustrating an example method for controlling a ventilation system according to various embodiments.

Referring to FIG. 18, the processor 192 of the ventilation system 1 may open the third damper 350 positioned at the first inlet 101a, as an outdoor air circulation is set. Opening of the first inlet 101a may allow outdoor air to flow into the housing 101 of the ventilation apparatus 100 (1801). In addition, the processor 192 may close the second damper 340.

The processor 192 of the ventilation system 1 may control the outdoor humidity sensor 151 to detect a first humidity (outdoor humidity) of the outdoor air, and may control the indoor humidity sensor 152 to detect a second humidity (indoor humidity) of the room air (1802). The processor 192 may control the outdoor temperature sensor 141 to detect a first temperature (outdoor temperature) of the outdoor air, and may control the indoor temperature sensor 142 to detect a second temperature (indoor temperature) of the room air (1803).

The processor 192 may determine an operation mode of the ventilation system 1 based on the first humidity of the outdoor air, the second humidity of the room air, the first temperature of the outdoor air, and the second temperature of the room air (1804). As the operation mode of the ventilation system 1, the cooling dehumidification mode (first mode) for drying and cooling the outdoor air, the constant temperature dehumidification mode (second mode) for drying and heating the outdoor air, the moisture recovery mode (third mode) for heating the outdoor air, and the ventilation mode (fourth mode) for stopping the operation of the compressor may be provided.

The processor 192 may control the compressor 211, the four-way valve 213, the first expansion device 160, and the second expansion device 170 based on the determined operation mode of the ventilation system 1 (1805). In addition, the processor 192 may control the first blower 109a, the second blower 109b, and the first damper 330 based on the operation mode of the ventilation system 1.

In the cooling dehumidification mode (first mode) and the constant temperature dehumidification mode (second mode), the compressor 211 and the four-way valve 213 may be controlled to allow the refrigerant to circulate in the order of the compressor 211, the outdoor heat exchanger 220, the first heat exchanger 120 and the second heat exchanger 130.

In addition, in the cooling dehumidification mode (first mode), the first expansion device 160 may be controlled to expand the refrigerant, and the second expansion device 170 may be controlled to expand or not expand the refrigerant. In the constant temperature dehumidification mode (second mode), the first expansion device 160 may be controlled to not expand the refrigerant, and the second expansion device 170 may be controlled to expand the refrigerant.

A direction in which the refrigerant flows in the moisture recovery mode (third mode) may be opposite to a direction in which the refrigerant flows in the cooling dehumidification mode (first mode) and the constant temperature dehumidification mode (second mode). In the moisture recovery mode (third mode), the compressor 211 and the four-way valve 213 may be controlled to allow the refrigerant to circulate in the order of the compressor 211, the second heat exchanger 130, the first heat exchanger 120, and the outdoor heat exchanger 220. In the moisture recovery mode (third mode), the second expansion device 170 may be controlled to not expand the refrigerant, and the first expansion device 160 may be controlled to expand or not expand the refrigerant.

In the ventilation mode (fourth mode), the operation of the compressor 211 may be stopped to prevent and/or reduce the refrigerant from flowing.

The method for controlling the ventilation system 1 described in FIG. 18 may also be performed by the processor 55 of the integrated air conditioning system 2.

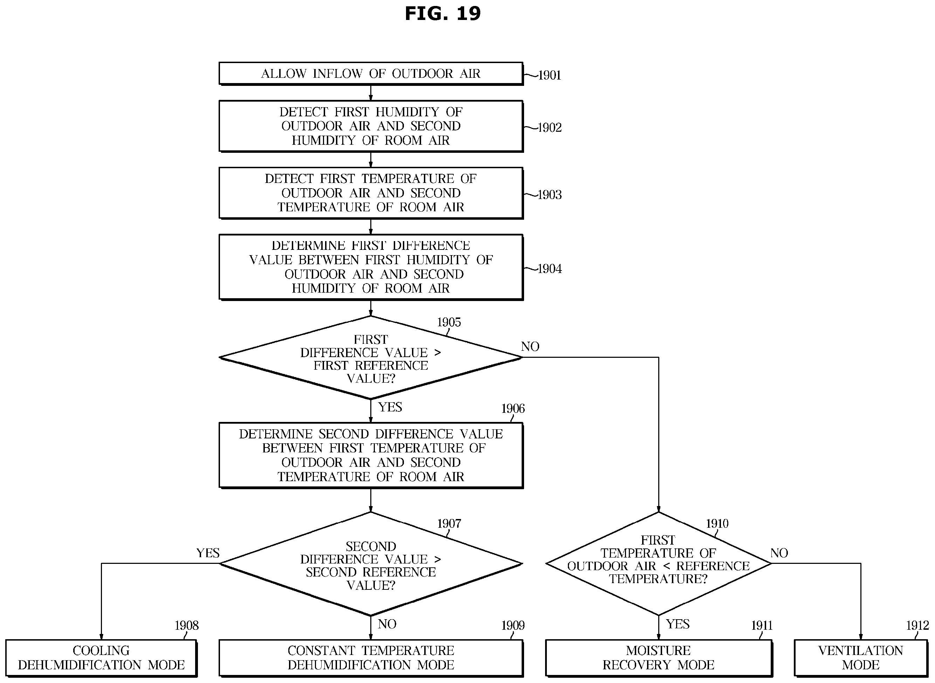

FIG. 19 is a flowchart illustrating an example method for controlling a ventilation system according to various embodiments.

Referring to FIG. 19, operations 1901, 1902 and 1903 may correspond to operations 1801, 1802 and 1803 described in FIG. 18, respectively. The processor 192 of the ventilation system 1 may determine a difference value (first difference value) between the first humidity of the outdoor air and the second humidity of the room air (1904). The processor 192 may determine whether the first difference value between the first humidity of the outdoor air and the second humidity of the room air is greater than a first reference value (1905). **In** a case where the first difference value between the first humidity of the outdoor air and the second humidity of the room air is greater than the first reference value, the processor 192 may determine a difference value (second difference value) between the first temperature of the outdoor air and the second temperature of the room air (1906). The processor 192 may determine whether the second difference value between the first temperature of the outdoor air and the second temperature of the room air is greater than a second reference value (1907).

The first reference value about the difference between the outdoor humidity and the indoor humidity and the second reference value about the difference between the outdoor temperature and the indoor temperature may be varied depending on the design. In addition, the first reference value and the second reference value may be changed according to a user input through the user interface 180. For example, the first reference value and the second reference value may each be 0.

The processor 192 may determine the operation mode of the ventilation system as the cooling dehumidification mode (first mode) (1908), based on the first difference value between the first humidity of the outdoor air and the second humidity of the room air being greater than the first reference value and the second difference value between the first temperature of the outdoor air and the second temperature of the room air being greater than the second reference value. In other words, in a case where the outdoor humidity is higher than the indoor humidity and the outdoor temperature is higher than the indoor temperature, the ventilation system 1 may operate in the cooling dehumidification mode to remove moisture contained in the outdoor air flowing into the housing 101 and reduce the temperature of the outdoor air.

The processor 192 may determine the operation mode of the ventilation system as the constant temperature dehumidification mode (second mode) (1909), based on the first difference value between the first humidity of the outdoor air and the second humidity of the room air being greater than the first reference value and the second difference value between the first temperature of the outdoor air and the second temperature of the room air being less than or equal to the second reference value. In other words, in a case where the outdoor humidity is higher than the indoor humidity but the outdoor temperature is lower than or equal to the indoor temperature, moisture contained in the room air is required to be removed, but the temperature of the outdoor air is not required to be reduced. Accordingly, the ventilation system 1 may operate in the constant temperature dehumidification mode to remove moisture contained in the outdoor air flowing into the housing 101 and maintain the indoor temperature.

The processor 192 may determine whether the first temperature of the outdoor air is lower than a reference temperature (1910), in a case where the first difference value between the first humidity of the outdoor air and the second humidity of the room air is less than or equal to the first reference value. The reference temperature may be varied depending on the design. In addition, the reference temperature may be changed according to a user input through the user interface 180. For example, the reference temperature may be 0 degrees.

The processor 192 may determine the operation mode of the ventilation system 1 as the moisture recovery mode (third mode) (1911), based on the first difference value between the first humidity of the outdoor air and the second humidity of the room air being less than or equal to the first reference value and the first temperature of the outdoor air being lower than the reference temperature. In a case where the outdoor humidity is lower than the indoor humidity and the outdoor temperature is lower than the reference temperature, dehumidification of the outdoor air is not required and freezing prevention/reduction of the total heat exchanger 110 may be required. The ventilation system 1 may operate in the moisture recovery mode to increase the temperature of the outdoor air supplied to the total heat exchanger 110. Even though the temperature of the outdoor air is low, freezing of the total heat exchanger 110 does not occur, and thus heat exchange between the outdoor air and the room air may be enabled in the total heat exchanger 110, and moisture contained in the room air may be recovered back into the indoor space.

The processor 192 may determine the operation mode of the ventilation system 1 as the ventilation mode (fourth mode) (1912), based on the first difference value between the first humidity of the outdoor air and the second humidity of the room air being less than or equal to the first reference value and the first temperature of the outdoor air being higher than or equal to the reference temperature. In a case where the outdoor humidity is lower than the indoor humidity, dehumidification of the outdoor air may not be required, and in a case where the outdoor temperature is above zero degrees Celsius, freezing of the total heat exchanger 110 may not occur. In this case, heat exchange between the outdoor air and the heat exchangers 120 and 130 may not be required. The ventilation system 1 may operate in the ventilation mode to stop the compressor 211 and perform ventilation using only the total heat exchanger 110.

The method for controlling the ventilation system 1 described in FIG. 19 may also be performed by the processor 55 of the integrated air conditioning system 2.

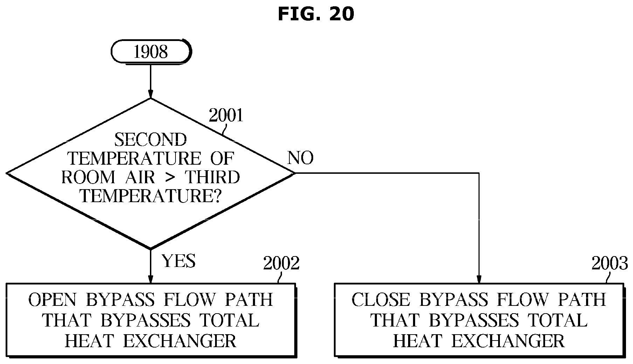

FIG. 20 is a flowchart illustrating an example method for controlling a ventilation system of FIG. 19 according to various embodiments.

Referring to FIG. 20, in a case where the ventilation system 1 operates in the cooling dehumidification mode (first mode) (1908), the processor 192 may determine whether the second temperature of the room air is higher than a third temperature detected by the heat exchange temperature sensor 143 (2001).

The processor 192 may open the first damper 330 to open the bypass flow path 331 that bypasses the total heat exchanger 110 (2002), based on the second temperature of the room air being higher than the third temperature detected by the heat exchange temperature sensor 143.

In a case where the temperature of the room air is higher than a temperature of air cooled in the heat exchangers 120 and 130, a cooling effect may be increased by preventing and/or reducing the cooled air from passing through the total heat exchanger 110. Heat exchange between the cooled air and the room air in the total heat exchanger 110 may reduce the cooling effect. Accordingly, in a case where the temperature of the room air is relatively high in the cooling dehumidification mode (first mode), it is preferable to allow the outdoor air drawn in through the first inlet 101a to flow to the bypass flow path 331.

The processor 192 may close the first damper 330 to close the bypass flow path 331 that bypasses the total heat exchanger 110 (2003), based on the second temperature of the room air being lower than or equal to the third temperature detected by the heat exchange temperature sensor 143.

The method for controlling the ventilation system 1 described in FIG. 20 may also be performed by the processor 55 of the integrated air conditioning system 2.

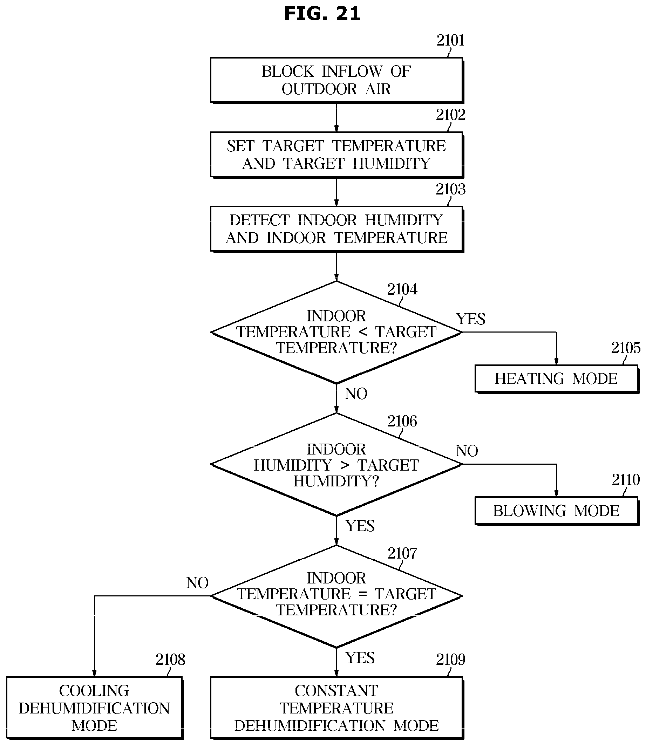

FIG. 21 is a flowchart illustrating an example method for controlling a ventilation system during indoor air circulation according to various embodiments.

Referring to FIG. 21, as an indoor air circulation is set, the processor 192 of the ventilation system 1 may open the second damper 340 positioned between the first intake room 104 and the first discharge room 105 and close the third damper 350 positioned at the first inlet 101a. Accordingly, an inflow of outdoor air into the housing 101 of the ventilation apparatus 100 may be blocked (2101).

The processor 192 of the ventilation system 1 may set a target temperature and a target humidity based on a user input through the user interface 180 or the input interface 52 of the integrated controller 50 (2102). The target temperature and the target humidity may also be automatically set based on an outdoor environment and/or an indoor environment.

The processor 192 of the ventilation system 1 may control the indoor humidity sensor 152 to detect an indoor humidity, and may control the indoor temperature sensor 142 to detect an indoor temperature (2103).

During the indoor air circulation, the processor 192 may determine an operation mode of the ventilation system 1 as the heating mode, based on the indoor temperature being lower than the target temperature (2104, 2105).

In a case where the indoor temperature is higher than or equal to the target temperature, the processor 192 may determine the operation mode of the ventilation system 1 as the cooling dehumidification mode or the constant temperature dehumidification mode based on the indoor humidity being higher than the target humidity.

In a case where the indoor temperature is higher than the target temperature and the indoor humidity is higher than the target humidity, the processor 192 may determine the operation mode of the ventilation system 1 as the cooling dehumidification mode (2104, 2106, 2107, 2108).

In a case where the indoor temperature is equal to the target temperature and the indoor humidity is higher than the target humidity, the processor 192 may determine the operation mode of the ventilation system 1 as the constant temperature dehumidification mode (2104, 2106, 2107, 2109).

During the indoor air circulation, in a case where the indoor temperature is higher than or equal to the target temperature, but the indoor humidity is lower than or equal to the target temperature, the processor 192 may determine the operation mode of the ventilation system 1 as the blowing mode (2104, 2106, 2110).

According to an example embodiment of the disclosure, a ventilation system may include a ventilation apparatus and an outdoor unit. The ventilation system may include: a housing including a first inlet configured to draw outdoor air into the housing, a second inlet configured to draw room air into the housing, a first outlet through configured to discharge outdoor air into an indoor space, and a second outlet configured to discharge room air to an outdoor space; a total heat exchanger configured to perform heat exchange between the outdoor air and the room air; a first heat exchanger disposed between the first inlet and the total heat exchanger; a second heat exchanger disposed between the first inlet and the first heat exchanger; a compressor configured to supply a refrigerant to the first heat exchanger and the second heat exchanger; a four-way valve configured to switch a flow direction of the refrigerant; a first expansion device comprising a valve disposed at an inlet of the first heat exchanger and configured to expand the refrigerant; a second expansion device comprising a valve disposed between the first heat exchanger and the second heat exchanger and configured to expand the refrigerant; and at least one processor comprising processing circuitry.

At least one processor, individually and/or collectively, may be configured to: determine an operation mode of the ventilation system, based on a first humidity of the outdoor air and a second humidity of the room air detected by a humidity sensor, and a first temperature of the outdoor air and a second temperature of the room air detected by a temperature sensor; and control the compressor, the four-way valve, the first expansion device, and the second expansion device based on the operation mode of the ventilation system.

At least one processor, individually and/or collectively, may be configured to: determine, as the operation mode of the ventilation system, a first mode for drying and cooling the outdoor air, a second mode for drying and heating the outdoor air, a third mode for heating the outdoor air, or a fourth mode for stopping an operation of the compressor.

At least one processor, individually and/or collectively, may be configured to control the four-way valve to allow a flow direction of the refrigerant in the third mode to be opposite to a flow direction of the refrigerant in the first mode and the second mode.

At least one processor, individually and/or collectively, may be configured to: adjust an opening degree of the first expansion device to allow the refrigerant to be expanded by the first expansion device in the first mode; adjust an opening degree of the second expansion device to allow the refrigerant to be expanded by the second expansion device in the second mode without the refrigerant being expanded by the first expansion device; or to control the second expansion device to block the second expansion device from expanding the refrigerant in the third mode.

At least one processor, individually and/or collectively, may be configured to: determine the operation mode of the ventilation system as the first mode or the second mode, based on whether a second difference value between the first temperature of the outdoor air and the second temperature of the room air is greater than a second reference value, based on a first difference value between the first humidity of the outdoor air and the second humidity of the room air being greater than a first reference value.

At least one processor, individually and/or collectively, may be configured to: determine the operation mode of the ventilation system as the first mode based on the second difference value being greater than the second reference value; and determine the operation mode of the ventilation system as the second mode based on the second difference value being less than or equal to the second reference value.

At least one processor, individually and/or collectively, may be configured to: determine the operation mode of the ventilation system as the third mode or the fourth mode, based on whether the first temperature of the outdoor air is lower than a reference temperature based on a first difference value between the first humidity of the outdoor air and the second humidity of the room air being less than or equal to a first reference value.

At least one processor, individually and/or collectively, may be configured to: determine the operation mode of the ventilation system as the third mode based on the first temperature of the outdoor air being lower than the reference temperature; and determine the operation mode of the ventilation system as the fourth mode based on the first temperature of the outdoor air being higher than or equal to the reference temperature.

The ventilation system may further include: a damper disposed between the first inlet and the first outlet and configured to open or close a bypass flow path configured to bypass the total heat exchanger. At least one processor, individually and/or collectively, may be configured to open the damper to open the bypass flow path during an operation of the ventilation system in the first mode.

The ventilation system may further include a heat exchange temperature sensor disposed between the first heat exchanger and the total heat exchanger, and configured to detect a temperature of air passing through the first heat exchanger and the second heat exchanger. At least one processor, individually and/or collectively, may be configured to open the damper based on the second temperature of the room air being higher than a third temperature detected by the heat exchange temperature sensor in the first mode.

An example method for controlling a ventilation system including a total heat exchanger configured to perform heat exchange between outdoor air drawn in through a first inlet of a housing and room air drawn in through a second inlet of the housing, and a first heat exchanger and a second heat exchanger disposed between the first inlet and the total heat exchanger is disclosed.

According to an example embodiment of the disclosure, the method may include: detecting, by a humidity sensor, a first humidity of the outdoor air and a second humidity of the room air; detecting, by a temperature sensor, a first temperature of the outdoor air and a second temperature of the room air; determining, by at least one processor, individually and/or collectively, an operation mode of the ventilation system, based on the first humidity of the outdoor air, the second humidity of the room air, the first temperature of the outdoor air, and the second temperature of the room air; and controlling, by at least one processor, individually and/or collectively, a compressor configured to supply a refrigerant to a heat exchanger, a four-way valve configured to switch a flow direction of the refrigerant, a first expansion device including a valve disposed at an inlet of a first heat exchanger to expand the refrigerant, and a second expansion device including a valve disposed between the first heat exchanger and a second heat exchanger, based on the operation mode of the ventilation system.

The operation mode of the ventilation system may be determined as a first mode for drying and cooling the outdoor air, a second mode for drying and heating the outdoor air, a third mode for heating the outdoor air, or a fourth mode for stopping an operation of the compressor.

The controlling may include controlling the four-way valve to allow a flow direction of the refrigerant in the third mode to be opposite to a flow direction of the refrigerant in the first mode and the second mode.

The controlling may include: adjusting an opening degree of the first expansion device to allow the refrigerant to be expanded by the first expansion device in the first mode; adjusting an opening degree of the second expansion device to allow the refrigerant to be expanded by the second expansion device in the second mode without the refrigerant being expanded by the first expansion device; or controlling the second expansion device to prevent and/or reduce expansion of the refrigerant by the second expansion device in the third mode.

The determining of the operation mode of the ventilation system may include: determining the operation mode of the ventilation system as the first mode or the second mode, based on whether a second difference value between the first temperature of the outdoor air and the second temperature of the room air is greater than a second reference value, in a case where a first difference value between the first humidity of the outdoor air and the second humidity of the room air is greater than a first reference value.

The operation mode of the ventilation system may be determined as the first mode based on the second difference value being greater than the second reference value, or may be determined as the second mode based on the second difference value being less than or equal to the second reference value.

The determining of the operation mode of the ventilation system may include determining the operation mode of the ventilation system as the third mode or the fourth mode, based on whether the first temperature of the outdoor air is lower than a reference temperature, in a case where a first difference value between the first humidity of the outdoor air and the second humidity of the room air is less than or equal to a first reference value.

The operation mode of the ventilation system may be determined as the third mode based on the first temperature of the outdoor air being lower than the reference temperature, or may be determined as the fourth mode based on the first temperature of the outdoor air being higher than or equal to the reference temperature.

The ventilation system may further include a damper disposed between the first inlet and the first outlet and configured to open or close a bypass flow path configured to bypass the total heat exchanger. The method may further include: opening, under control of at least one processor, individually and/or collectively, the damper to open the bypass flow path during an operation of the ventilation system in the first mode.

The opening of the damper may be performed based on the second temperature of the room air being higher than a third temperature of air passing through the first heat exchanger and the second heat exchanger in the first mode.

According to the disclosure, a ventilation system and a method for controlling the same may remove moisture contained in the air drawn in from the outside before the outdoor air passes through a heat exchanger, and cool or heat the air, and thus air with appropriate humidity and temperature may be supplied to an indoor space.

According to the disclosure, a ventilation system and a method for controlling the same may prevent and/or reduce freezing of a heat exchanger, and thus usability of the heat exchanger may be increased even in a low outdoor temperature environment.

According to the disclosure, a ventilation system and a method for controlling the same may allow or block an inflow of outdoor air depending on a setting.

The disclosed embodiments may be implemented in the form of a recording medium that stores instructions executable by a computer. The instructions may be stored in the form of program codes, and when executed by a processor, the instructions may create a program module to perform operations of the disclosed embodiments.

The machine-readable recording medium may be provided in the form of a non-transitory storage medium, wherein the 'non-transitory storage medium' is a tangible device, and may not include a signal (e.g., an electromagnetic wave), but this term does not differentiate between where data is semi-permanently stored in the storage medium and where the data is temporarily stored in the storage medium. For example, a 'non-transitory storage medium' may include a buffer in which data is temporarily stored.

The method according to the various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a storage medium, such as a memory of a server of a manufacturer, a server of an application store, or a relay server.

Although embodiments of the disclosure have been described with reference to the accompanying drawings, one skilled in the art will appreciate that various modifications may be easily made without departing from the technical spirit or essential features of the disclosure. Accordingly, the foregoing embodiments should be regarded as illustrative rather than limiting in all aspects. It will also be understood that any of the embodiment(s) described herein may be used in conjunction with any other embodiment(s) described herein.

## Claims

1. A ventilation system, comprising:
a housing including a first inlet configured to draw outdoor air into the housing, a second inlet configured to draw room air into the housing, a first outlet configured to discharge the outdoor air into an indoor space, and a second outlet configured to discharge room air to an outdoor space;
a total heat exchanger configured to perform heat exchange between the outdoor air and the room air;
a first heat exchanger disposed between the first inlet and the total heat exchanger;
a second heat exchanger disposed between the first inlet and the first heat exchanger;
a compressor configured to supply a refrigerant to the first heat exchanger and the second heat exchanger;
a four-way valve configured to switch a flow direction of the refrigerant;
a first expansion device comprising a valve disposed at an inlet of the first heat exchanger to expand the refrigerant;
a second expansion device comprising a valve disposed between the first heat exchanger and the second heat exchanger to expand the refrigerant; and
at least one processor, comprising processing circuitry,
wherein at least one processor is configured to:
determine an operation mode of the ventilation system, based on a first humidity of the outdoor air and a second humidity of the room air detected by a humidity sensor, and a first temperature of the outdoor air and a second temperature of the room air detected by a temperature sensor, and
control the compressor, the four-way valve, the first expansion device, and the second expansion device based on the operation mode of the ventilation system.

2. The ventilation system of claim 1, wherein at least one processor is configured to: determine, as the operation mode of the ventilation system, a first mode for drying and cooling the outdoor air, a second mode for drying and heating the outdoor air, a third mode for heating the outdoor air, or a fourth mode for stopping an operation of the compressor.

3. The ventilation system of claim 2, wherein at least one processo is configured to control the four-way valve to allow a flow direction of the refrigerant in the third mode to be opposite to a flow direction of the refrigerant in the first mode and the second mode.

4. The ventilation system of claim 3, wherein at least one processor is configured to control the ventilation system to:
adjust an opening degree of the first expansion device to allow the refrigerant to be expanded by the first expansion device in the first mode;
adjust an opening degree of the second expansion device to allow the refrigerant to be expanded by the second expansion device in the second mode without the refrigerant being expanded by the first expansion device; or
control the second expansion device to prevent expanding of the refrigerant by the second expansion device in the third mode.

5. The ventilation system of claim 2, wherein at least one processo is configured to determine the operation mode of the ventilation system as the first mode or the second mode, based on whether a second difference value between the first temperature of the outdoor air and the second temperature of the room air is greater than a second reference value, based on a first difference value between the first humidity of the outdoor air and the second humidity of the room air being greater than a first reference value.

6. The ventilation system of claim 5, wherein at least one processor is configured to:
determine the operation mode of the ventilation system as the first mode based on the second difference value being greater than the second reference value, or
determine the operation mode of the ventilation system as the second mode based on the second difference value being less than or equal to the second reference value.

7. The ventilation system of claim 2, wherein at least one processor is configured to determine the operation mode of the ventilation system as the third mode or the fourth mode, based on whether the first temperature of the outdoor air is lower than a reference temperature, based on a first difference value between the first humidity of the outdoor air and the second humidity of the room air being less than or equal to a first reference value.

8. The ventilation system of claim 7, wherein at least one processor is configured to:
determine the operation mode of the ventilation system as the third mode based on the first temperature of the outdoor air being lower than the reference temperature, or
determine the operation mode of the ventilation system as the fourth mode based on the first temperature of the outdoor air being higher than or equal to the reference temperature.

9. The ventilation system of claim 2, further comprising:
a damper disposed between the first inlet and the first outlet and configured to open or close a bypass flow path configured to bypass the total heat exchanger,
wherein at least one processor is configured to open the damper to open the bypass flow path during an operation of the ventilation system in the first mode.

10. The ventilation system of claim 9, further comprising:
a heat exchange temperature sensor disposed between the first heat exchanger and the total heat exchanger, and configured to detect a temperature of air passing through the first heat exchanger and the second heat exchanger,
wherein at least one processor is configured to open the damper based on the second temperature of the room air being higher than a third temperature detected by the heat exchange temperature sensor in the first mode.

11. A method for controlling a ventilation system comprising a total heat exchanger configured to perform heat exchange between outdoor air drawn in through a first inlet of a housing and room air drawn in through a second inlet of the housing, and a first heat exchanger and a second heat exchanger disposed between the first inlet and the total heat exchanger, the method comprising:
detecting, by a humidity sensor, a first humidity of the outdoor air and a second humidity of the room air;
detecting, by a temperature sensor, a first temperature of the outdoor air and a second temperature of the room air;
determining, by at least one processor, an operation mode of the ventilation system, based on the first humidity of the outdoor air, the second humidity of the room air, the first temperature of the outdoor air, and the second temperature of the room air; and
controlling, by at least one processor, a compressor configured to supply a refrigerant to the first heat exchanger and the second heat exchanger, a four-way valve configured to switch a flow direction of the refrigerant, a first expansion device disposed at an inlet of the first heat exchanger to expand the refrigerant, and a second expansion device disposed between the first heat exchanger and the second heat exchanger, based on the operation mode of the ventilation system.

12. The method of claim 11, wherein the operation mode of the ventilation system is determined as a first mode for drying and cooling the outdoor air, a second mode for drying and heating the outdoor air, a third mode for heating the outdoor air, or a fourth mode for stopping an operation of the compressor.

13. The method of claim 12, wherein the controlling comprises controlling the four-way valve to allow a flow direction of the refrigerant in the third mode to be opposite to a flow direction of the refrigerant in the first mode and the second mode.

14. The method of claim 13, wherein the controlling comprises:
adjusting an opening degree of the first expansion device to allow the refrigerant to be expanded by the first expansion device in the first mode;
adjusting an opening degree of the second expansion device to allow the refrigerant to be expanded by the second expansion device in the second mode without the refrigerant being expanded by the first expansion device; or
controlling the second expansion device to prevent expansion of the refrigerant by the second expansion device in the third mode.

15. The method of claim 12, wherein the determining of the operation mode of the ventilation system comprises determining the operation mode of the ventilation system as the first mode or the second mode, based on whether a second difference value between the first temperature of the outdoor air and the second temperature of the room air is greater than a second reference value, based on a first difference value between the first humidity of the outdoor air and the second humidity of the room air being greater than a first reference value.
